# EUROPEAN PATENT SPECIFICATION

(11) **EP 1 345 352 B1**
(45) Date of publication and mention of the grant of the patent: **17.01.2007**
(21) Application number: 03005311.0
(22) Date of filing: 11.03.2003
(51) Int. Cl.: H04L 12/18, H04L 29/06, H04L 9/08

(54) **Time-window-constrained multicast for future delivery multicast**
Auf ein Zeitfenster beschränkte Mehrfachsendung zur späteren Übertragung mittels Mehrfachsendung
Multidiffusion limitée à une fenêtre temporelle pour une multidiffusion future

(30) Priority: 15.03.2002 US 99242
(43) Date of publication of application: 17.09.2003
(73) Proprietor: MICROSOFT CORPORATION, Redmond, WA 98052 (US)
(72) Inventor: Padmanabhan, Venkata N., Bellevue, Washington 98007 (US); Cabrera, Luis Felipe, Bellevue, Washington 98004 (US)
(74) Representative: Grünecker, Kinkeldey, Stockmair & Schwanhäusser Anwaltssozietät

(56) References cited:
- WO-A-01/69848
- US-A- 5 920 701
- US-B1- 6 223 286
- AKYILDIZ I F ET AL: "MULTIMEDIA GROUP SYNCHRONIZATION PROTOCOLS FOR INTEGRATED SERVICES NETWORKS" IEEE JOURNAL ON SELECTED AREAS IN COMMUNICATIONS, IEEE INC. NEW YORK, US, vol. 14, no. 1, 1996, pages 162-173, XP000548819 ISSN: 0733-8716
- TANAKA S ET AL: "A key distribution and rekeying framework with totally ordered multicast protocols" SHIZUOKA UNIVERSITY, 2001, pages 831-838, XP010534359
- PULIDO J-M ET AL: "SM: real-time multicast protocols for simultaneous message delivery" REAL-TIME COMPUTING SYSTEMS AND APPLICATIONS, 1998. PROCEEDINGS. FIFTH INTERNATIONAL CONFERENCE ON HIROSHIMA, JAPAN 27-29 OCT. 1998, LOS ALAMITOS, CA, USA,IEEE COMPUT. SOC, US, 27 October 1998 (1998-10-27), pages 66-73, XP010312416 ISBN: 0-8186-9209-X

## Description

### CROSS-REFERENCE TO RELATED APPLICATION

This application is related to United States application Serial No. , entitled "Time-Window-Constrained Multicast using Connection Scheduling" (Attorney Docket Number 213530) filed concurrently with the present application, and which is incorporated herein by reference in its entirety.

### TECHNICAL FIELD

This invention relates generally to content delivery across a network and, more particularly, relates to delivering content to multiple clients within a given time frame.

### BACKGROUND OF THE INVENTION

Over the last 30 years, the Internet has grown from a few servers controlled by the government and a few educational institutions into a vast, heterogeneous network of servers and clients. The servers on the Internet provide more functionality than ever before, ranging from the advertisement and sale of automobiles to tutorials on Ancient Greece. The scope and impact of the Internet has steadily grown due to at least three inter-related factors: increasing computing power, increasing bandwidth and increasing numbers of users. Unfortunately, while computing power has generally grown with the demands of users, the limited bandwidth by which most communications is sent can be, and is at times, outstripped by the exponential growth of the number of users.

While this problem may be noticeable in smaller intranets and local-area networks, it is magnified on the Internet. For example, an important news or entertainment release, such as a government or judicial announcement, or a new music video clip can result in millions of hits per minute on the releasing website. Due to the necessarily finite bandwidth of service providers and web servers, such great demand can overwhelm a site, and a download that would ordinarily take seconds can take minutes or even hours. As users' connection speeds have improved, and users become accustomed to faster downloads, this delay in service has taken on increasing significance.

One of the solutions to this problem is multicasting. Multicasting is an Internet protocol that can allow for streaming content to be sent to many different users at the same time by a server sending only one stream of data. A specific port is used for multicasting: the server sends its streaming data to this port, and clients who wish to receive the multicast "listen" on the specified port. Using this method, some of the bandwidth problems of normal "unicasting" can be overcome, and users can receive the data in a more timely manner. Unfortunately, even this more efficient method can be overwhelmed if a large number of users are attempting to listen to the multicast. Furthermore, it is difficult for users of heterogeneous connection speeds to take advantage equally of the multicasting protocol. Those users with common analog connections to the Internet, such as through a dial-up Internet Service Provider (ISP), will invariably receive the data after those users with broadband Internet connections, such as a cable modem or a Digital Subscriber Line (DSL) modem.

Some information delivered by the Internet has a further complication in that it is not merely important that many users download content as quickly as possible; it is also important that they receive the content at the same time, or within a specified amount of time. One example of a situation in which the timing of the receipt of information can be important is the release of government data which can influence financial markets. In such a situation, those who receive the information first are in a position to profit from those who have not yet received the information. Another example can be the release of a music video clip from a popular musician or group. This example has the added problem that such a release can be many megabytes in size, further complicating its distribution. Furthermore, there is generally an initial time at which the government data or the music video clip is initially released. The problem then becomes how to send an event to a group of clients as close to this release time as possible, but not after some later time beyond which the information becomes useless or stale. This problem is relevant from both an efficiency and fairness standpoint.

One difficulty in accomplishing this task is the problem of network bandwidth discussed above. While most corporate networks are now connected by high-speed backbones to the Internet, there are still many users who connect to the Internet using analog modems. If a user connected to the Internet through a broadband connection, such as a DSL connection, were able to begin accessing the information at the same time as a user connected via a 56 Kbps dialup connection, the user with the broadband connection would finish receiving the information long before the user on the slower connection. For example, if the event to be downloaded were 10 MB in size, it would take a 56 Kbps connection approximately 24 minutes to download the event, and a 1Mbps digital subscriber line connection just 80 seconds.

Current methods of content distribution provide few tools to facilitate the sending of an event within a given time frame as fairly as possible to as many heterogeneous clients as necessary. Content and service providers generally pay no attention to fairness of distribution, or access at a particular time. Thus, only the fastest, most fortunate users will receive the content at an early time, often allowing them to unfairly profit from the other users who will receive the information at a later time proportional to network bandwidth and their own connection speed.

US 6,223,286 B1 relates to a multi-cast message transmission device and a message receiving protocol device which realizes a fair message delivery time for a multicast message transmitted to a plurality of message receiving protocol devices.

### SUMMARY OF THE INVENTION

It is the object of the invention to provide an enhanced method and system to fairly distribute an event to clients having heterogeneous bandwidth.

This object is solved by the invention as claimed in the independent claims.

Preferred embodiments are defined by the dependent claims.

The present invention is directed to a method, computer-readable medium and system for distributing an event to clients having heterogeneous bandwidth by sending an encrypted event prior to the event's release time and distributing a small, efficiently transmitted key to decrypt the event at the event's release time, or at another time so that each client receives the event at approximately the same time after the release time.

The present invention is further directed to a method, computer-readable medium and system for distributing an event to clients having heterogeneous bandwidth by sending an encrypted event prior to the event's release time to a trusted server connected to one or more clients, distributing a key to decrypt the event at the event's release time, or earlier, decrypting the event at the server, and distributing the event from the server to the connected clients at the event's release time or at another time so that each client receives the event at approximately the same time after the release time.

The present invention is also directed to a method, computer-readable medium and system for ensuring fairness of content distribution by sending an encrypted event either prior to or at an event's release time, and sending a small, efficiently transmitted key to decrypt the event at a time sufficiently prior to the end of a time frame after which the event is no longer useful or no longer relevant.

The present invention is additionally directed to a method, computer-readable medium and system of sending a small, efficiently transmitted key through multiple unicast or multicast copies. Such copies can be sent by a single trusted server, a specialized server dedicated to sending the key, or by multiple trusted servers simultaneously. By sending the key through multiple network paths, such as from different servers, the likelihood that at least one copy of the key will be received by each client, at an appropriate time, is greatly increased.

The present invention contemplates mechanisms that attempt to provide a fairness of distribution by allowing interested clients to receive, at approximately the same time, an event released at a given release time, despite differences in the clients' connection bandwidths. The differences in connection bandwidths can be due to a number of factors, including the speed at which the client is connected to a server, the congestion of inter-server connections, and the like. At least one originating server contains the data to be released. The originating server can be connected to a number of trusted edge servers which further deliver content to non-trusted servers and clients connected to the trusted edge servers. Alternatively, the originating server can be connected directly to non-trusted servers or clients. A trusted edge server is a server that can be trusted not to release information ahead of a selected release time. Thus, a trusted edge server is at the "edge" of a delivery network comprising trusted servers, at least one originating server, and the connections in between.

Prior to the time at which the data is to be released to the clients, an encrypted data can be distributed from one or more originating server to clients that can locally store and decrypt the data. Subsequently, at the release time, or after, a small, efficiently transmitted key that can decrypt the encrypted data can be sent to the clients. Because the key is generally of a sufficiently small size, each of the clients or servers should receive the key within a narrow range of time, ensuring that each client receives access to the data at approximately the same time.

The encrypted data can also be decrypted at a server and then sent, in an unencrypted form, to the clients. If the server performing the decryption is a trusted edge server, the encrypted data and the key can be sent in advance of a release time. The trusted edge server can decrypt the data and send the data to the client at the release time, or prior to the release time such that the clients receive the data at the release time. Alternatively, if the server is not a trusted edge server, then the data can still be sent in advance of a release time, but the key can be sent at the release time, and the data can be decrypted and sent to the clients as quickly as possible, or at a coordinated time.

The present invention also contemplates that the encrypted data can be sent to the clients, at the release time, or afterwards, but that the key is not transmitted until such time as will provide that each client receives the key at approximately the same time, or that will provide that as many clients as possible receive the key prior to the expiration of a time window during which the data is to be disseminated. If the encrypted data can be sent such that the transmission to all of the clients has completed prior to the expiration of the time window, then the transmission of the key can be delayed until each client has received the encrypted data. Alternatively, if the encrypted data cannot be delivered to each client prior to the expiration of the time window, then the key can be sent some time prior to the completion of the delivery of the encrypted data to each client. Similarly, if the distribution requirements are such that it is more important for the information to be disseminated quickly, rather than fairly, the key can then also be sent at an earlier time, before each client has received the encrypted data.

The present invention further contemplates the use of multicasting protocols to minimize the transmission burden on an originating server or trusted edge server. By using a multicasting protocol, the server need only send a few copies, which are then replicated and retransmitted by routers to additional servers or clients. A particularly appropriate use of multicasting protocols can be the transmission of the key. Because the key can be a very small amount of data, an increase in efficiency can be realized by multicasting redundant copies of the key, rather than waiting for a retransmission request from a client. The key can also be multicast with error correction using a large amount of redundancy to avoid retransmission requests. Additionally, more than one server can transmit the key. The possible key servers include the originating server, a specialized central key server, a trusted edge server, or any combination of them.

The present invention still further contemplates an estimation of the speed at which data can be transferred to a client. The latency of a connection between the originating server and the trusted edge server, or between the trusted edge server and the client, or along the whole path, can be monitored or calculated. Based on empirical or theoretical estimates of connection latencies, a database of times for delivery for each client can be compiled. The delivery time can be used by the server to determine how soon it needs to begin transmission of either the encrypted data, the decrypted data, or the key. For example, a trusted edge server could initiate the transmission of the decrypted data to all of its clients that did not have the ability to store or decrypt the data locally at a time calculated by subtracting the minimum transmission time of all of the clients from the time at which the event is to be released. Alternatively, the trusted edge server could initiate the transmission of the event to each client at a time calculated by subtracting only the transmission time to that particular client from the time at which the event is to be released, thus taking the latency of the individual connections into account. If the server can perform this latter operation, the interested clients will each receive the event very close to the time at which the event is to be released, while the former operation yields a more variable arrival time. To further improve the fairness and efficiency, the clients might first be redistributed among the servers to reduce the effects of some sources of latency, and, in some situations, to place clients with similar connection speeds on the same servers (thus making the staggered delivery more effective). This can enable near simultaneous acquisition of an event by a number of differently situated and connected clients according to an estimation of their particular client-server transmission times.

Additional features and advantages of the invention will be made apparent from the following detailed description of illustrative embodiments that proceeds with reference to the accompanying figures.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:
Figure 1 is a block diagram generally illustrating an exemplary computer server on which the present invention resides;
Figure 2 is a block diagram generally illustrating an exemplary network environment across which the present invention can operate;
Figure 3 is a temporal diagram generally illustrating a method of delivering an event contemplated by the present invention;
Figure 4 is another temporal diagram generally illustrating a method of delivering an event contemplated by the present invention;
Figure 5 is another temporal diagram generally illustrating a method of delivering an event contemplated by the present invention;
Figure 6 is another temporal diagram generally illustrating a method of delivering an event contemplated by the present invention; and
Figure 7 is another temporal diagram generally illustrating a method of delivering an event contemplated by the present invention.

### DETAILED DESCRIPTION OF THE INVENTION

The present invention is directed to a method, computer-readable medium and system for distributing an event to a collection of clients in such a manner that the clients receive the event as simultaneously as possible, and that as many clients as possible receive the event prior to the end of a time frame after which the event is no longer meaningful or the information contained therein has become stale. Specifically, the present invention contemplates sending an encrypted event prior to a time at which the event is to be released. The encrypted event can be stored either at the client or at a server. At the time at which the event is to be released, a decryption key can be sent to each client or the server. Because the key is likely to be small, its transmission time will be relatively short, and each client will receive the key, and thus the ability to decrypt the data, approximately simultaneously. If the client does not have the ability to store the encrypted event, or decrypt it, it can be stored and decrypted at the server and then sent to the client. If a trusted edge server is decrypting the event for the client, it can be sent the key prior to the release time and can begin sending the decrypted event to the client prior to the release time to take into account a calculated or measured latency in the connection between the client and the trusted edge server. Alternatively, if the server decrypting the event for the client is not a trusted edge server, it can receive the key at the release time, or after, and send the decrypted event to the client once it has completed decrypting the event. If the encrypted event cannot be sent sufficiently early such that each client has completed receiving the encrypted event prior to the release time, the transmission of the key can be delayed to allow clients to finish receiving the encrypted event. The key can be sent as late as a time equal to the end time minus the transmission time of the key. Multicasting protocols can be employed to minimize the number of independent sessions. Because of the relatively small size of the key, significant redundancy can be used to ensure proper delivery of the key even through multicasting.

Turning to the drawings, wherein like reference numerals refer to like elements, the invention is described hereinafter in the context of a server computing environment. Although it is not required for practicing the invention, the invention is described as it is implemented by computer-executable instructions, such as program modules, that are executed by server or client computing devices. Generally, program modules include routines, programs, objects, components, data structures and the like that perform particular tasks or implement particular abstract data types.

The invention may be implemented in computer system configurations other than a server. For example, the invention may be realized in routers, multi-processor systems, personal computers, consumer electronics, minicomputers, mainframe computers and the like. The invention may also be practiced in distributed computing environments, where tasks are performed by remote processing devices that are linked through a communications network. In a distributed computing environment, program modules may be located in both local and remote memory storage devices.

Although the invention may be incorporated into many types of computing environments as suggested above, the following detailed description of the invention is set forth in the context of an exemplary general-purpose computing device in the form of a conventional server 20.

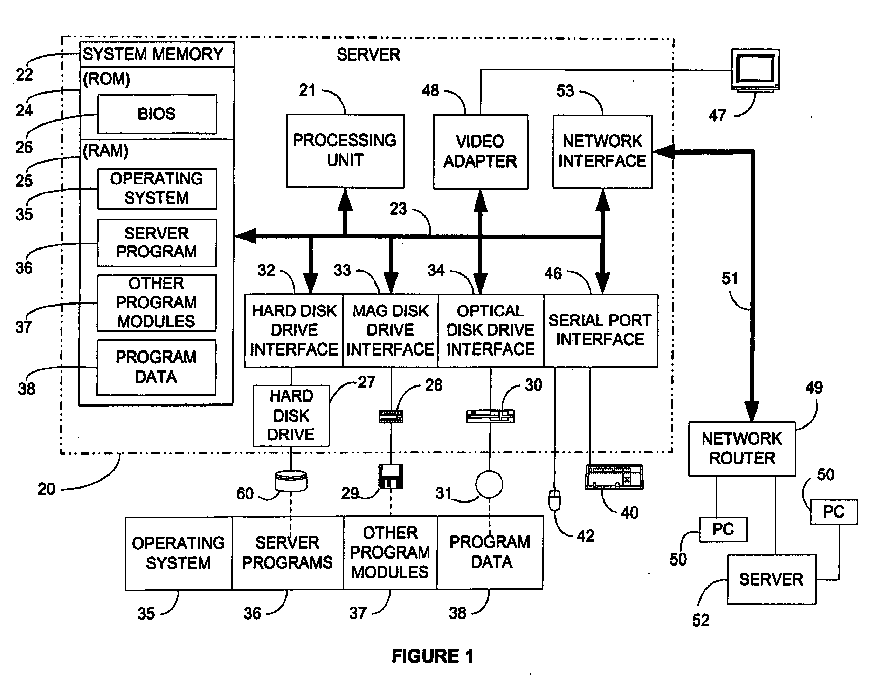

Before describing the invention in detail, the computing environment in which the invention operates is described in connection with Figure 1. The server 20 includes a processing unit 21, a system memory 22, and a system bus 23 that couples various system components including the system memory to the processing unit. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help to transfer information between elements within the server 20, such as during start-up, is stored in ROM 24. The server 20 further includes a hard disk drive 27 for reading from and writing to a hard disk 60, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated computer-readable media provide nonvolatile storage of computer readable instructions, data structures, program modules and other data for the server 20. Although the exemplary environment described herein employs a hard disk 60, a removable magnetic disk 29, and a removable optical disk 31, it will be appreciated by those skilled in the art that other types of computer readable media which can store data that is accessible by a computer, such as magnetic cassettes, flash memory cards, digital video disks, Bernoulli cartridges, random access memories, read only memories, and the like may also be used in the exemplary operating environment.

A number of program modules may be stored on the hard disk 60, magnetic disk 29, optical disk 31, ROM 24 or RAM 25, including an operating system 35, one or more server programs 36, other program modules 37, and program data 38. A user may enter commands and information into the server 20 through input devices such as a keyboard 40 and a pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or a universal serial bus (USB) port. A monitor 47 or other type of display device can also be connected to the system bus 23 via an interface, such as a video adapter 48.

The server 20 operates in a networked environment using logical connections to one or more remote clients 50 or additional servers 52 through routers and other network equipment, such as router 49. The remote clients 50 may be a personal computer (PC), a network PC, a peer device, other common network node, or other computing device, and typically includes many of the elements described above relative to the server 20. The remote server 52 may be a mail server, a mirror server, a web server or other common network node, and typically includes many or all of the elements described above relative to the server 20. The network router 49 may be a one-armed router, an edge router, a multicast router, a software application or other common network node, and typically determines the next point in the network to which a packet should be forwarded. The logical connection 51 depicted in Fig. 1 might be a local area network (LAN) and/or a wide area network (WAN). Such networking environments are commonplace in offices, enterprise-wide computer networks, intranets and the Internet.

When used in a LAN or WAN networking environment, the server 20 is connected to the network 51 through a network interface or adapter 53. In a networked environment, program modules depicted relative to the server 20, or portions thereof, may be stored in a remote memory storage device, accessed through the network router 49. It will be appreciated that the network connections shown are exemplary and other means of establishing a communications link between the computers may be used.

In the description that follows, the invention will be described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains it at locations in the memory system of the computer, which reconfigures or otherwise alters the operation of the computer in a manner well understood by those skilled in the art. The data structures where data is maintained are physical locations of the memory that have particular properties defined by the format of the data. However, while the invention is being described in the foregoing context, it is not meant to be limiting as those of skill in the art will appreciate that various of the acts and operations described hereinafter may also be implemented in hardware.

In accordance with one aspect of the invention, a set of clients connected to a network are provided an encrypted event prior to a release time for the event, and are subsequently provided a decryption key at the release time, or after, for decrypting the event. The event is likely to be large, requiring significant time to send to clients connected via a narrowband connection, while clients with a broadband connection can receive the event relatively quickly. A distribution of an unencrypted event would be unfair, as the broadband clients would have access to information contained within the event prior to the narrowband clients and could use the information to the detriment of the narrowband clients. A fairness of distribution, however, can be achieved by encrypting the event and sending it prior to the release time because each of the clients can receive the decryption key within a narrow span of time, as the key is relatively small and its transmission can be a very short amount of time, even among a wide range of connection speeds. Thus, each client will have access to the information contained within the event within a narrow span of time, providing a fair distribution.

As can be seen, to ensure a fairness of distribution, the encrypted event should be received prior to the decryption key, or the client will have the key, but no event to decrypt. However, this cannot be guaranteed in all cases. Thus the present invention contemplates sending the decryption key at the release time, or after if so desired, if the encrypted event was available from the originating server far enough in advance to be distributed reliably to the clients. The present invention also contemplates sending the decryption key at any time after the release time, up to a time equal to the end time minus the delivery time required to delivery the key. The sending of the key can, therefore, be delayed to allow as many clients as possible to finish receiving the encrypted event prior to sending the key. Thus, if the originating server was not able, or was not allowed, to send the encrypted event at an early enough time to allow the clients to receive the encrypted event prior to the release time, the sending of the key can be delayed as necessary to provide as fair access as possible to the information contained within the event.

In accordance with another aspect of the invention, the encrypted event can be sent to a server and decrypted at the server prior to being sent to a client. In such a manner the individual clients need not maintain the encrypted event, which can be quite large, nor do they need to burden their processing system by decrypting the event. A trusted server is a server in a network that can be trusted by an originating server not to release the event prior to the release time. A trusted edge server is the last server in a logical connection between the originating server and the client which can be trusted, and can, thus, be thought of as the edge of the trusted network. If the server decrypting the event for the client is a trusted edge server, then the trusted edge server can be provided with the encrypted event and the key prior to the release time and can decrypt the event prior to the release time. Alternatively, if the server decrypting the event for the client is not a trusted edge server, then the key can be sent after a release time, or sufficiently before it to allow the server to decrypt the event and transmit it to the client. However, the server cannot be trusted to hold the decrypted event and wait for a designated time. In either case, the problem remains that the decrypted event, which is likely to be large, will require a significant amount of time to transmit to narrowband clients. To minimize the difference in time between when a broadband client and a narrowband client receive the event, the trusted edge server can send the event in advance of the release time to the narrowband clients, so that the clients can finish receiving the event at approximately the same time.

In accordance with yet another aspect of the present invention, the encrypted event and the decryption key can be sent using multicasting protocols to increase network efficiency and distribute the burden of transmission. As is known by those skilled in the art, multicasting often does not provide an efficient mechanism to request a retransmission if the transmitted data is lost or corrupted. Because the key can be quite small, it can be more efficient to send the key with significant redundancy, and thereby minimize the chances that a retransmission will be required. For example, multiple copies of the key can be sent in a single message that can sill be quite small and transmitted efficiently, even to narrowband clients. Alternatively, a single copy of the key can be sent through different network routes, such as from different key servers, including the originating server, the trusted edge servers, a specialized key server, or any combination thereof.

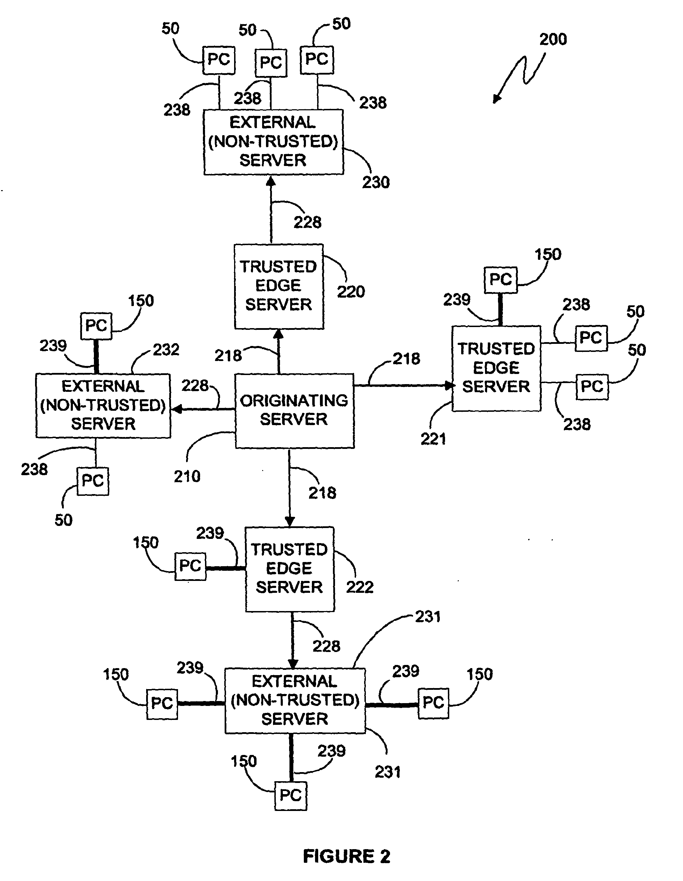

In keeping with the invention, Figure 2 illustrates an exemplary networked environment. Importantly, the present invention is not limited to implementation on any particular network protocol. It can be implemented using TCP/IP protocols, AppleTalk protocols, Novell protocols, as well as on a Content Delivery Network, among others. These protocols will, of course, provide different levels of functionality. Therefore, in some networks, the server's software might perform more functions, while in other networks, the server's software might depend on the underlying protocols to provide this functionality. When describing the exemplary embodiments of the present invention, the particular information or functionality required can be provided by the underlying protocols or by software on the servers or clients. The underlying methods remain unchanged and can simply incorporate existing functions to complete the required tasks.

Figure 2 illustrates a network environment 200 in which an exemplary embodiment of the invention can be described. An originating server 210 connected to a network comprising trusted edge servers 220, 221, and 222 and additional servers, that are not trusted, such as servers 230, 231, and 232. The network also contains clients, in the form of personal computing devices (PCs), which are logically connected to client machines. Clients 50, for example, can be connected through narrowband connections 238 and clients 150 can be connected through broadband connections 239. As is known by those skilled in the art, a narrowband connection is generally a dial-up connection at commonly used analog modem speeds, such as 56 kbps or 33.6 kbps. A broadband connection can be made through any number of technologies, such as cable modems, Digital Subscriber Line (DSL) modems, or satellite modems, and generally provides a throughput orders of magnitude greater than narrowband connections.

In a preferred embodiment, an event is originated at the originating server 210. An event can be any collection of data that is to be disseminated to clients 50 and 150. For example, an event can be as simple as the release of economic news from a government accounting bureau or department, or it can be significantly larger and more complex, such as a digital movie showcasing the release of a new product or service from a business or a new music video from a popular musician or group. Generally, the event is of such a nature that its distribution prior to a release time is inappropriate. For example, if government economic data were to be disseminated prior to its release time, it could upset financial markets. Similarly, if a new music video was released prior to its release time, the marketing of the video may not have had a sufficient time to generate demand, and the video could be seen as a failure. An event is also generally of such a nature that fairness of delivery is important. Thus, if government economic data were to be released to some clients prior to other clients, the clients which had received the data could use it to profit from those that had not already received it. Likewise, if one group of clients received a new music video prior to another group, any media attention focused on the unfairness of the distribution could detract from more favorable publicity regarding the quality of the video itself. Thus, the present invention contemplates the delivery of information, or event, in a fair manner, as between clients of different bandwidth and computational capacities.

The information contained within the event being distributed to the clients will also often have an end time beyond which the information becomes stale or irrelevant. For some data, like a government economic report, the information may be current for a month or more, until the next report is delivered. Similarly, a new music video can be considered current for a few weeks. Alternatively, some data which can be distributed to clients can loose its relevance very quickly. For example, a movie showing a meteorological radar time lapse for a given area may only be current for 15 minutes. The present invention contemplates the delivery of the event in a fair manner, and prior to the end time, after which the information contained in the event may not be useful to the clients.

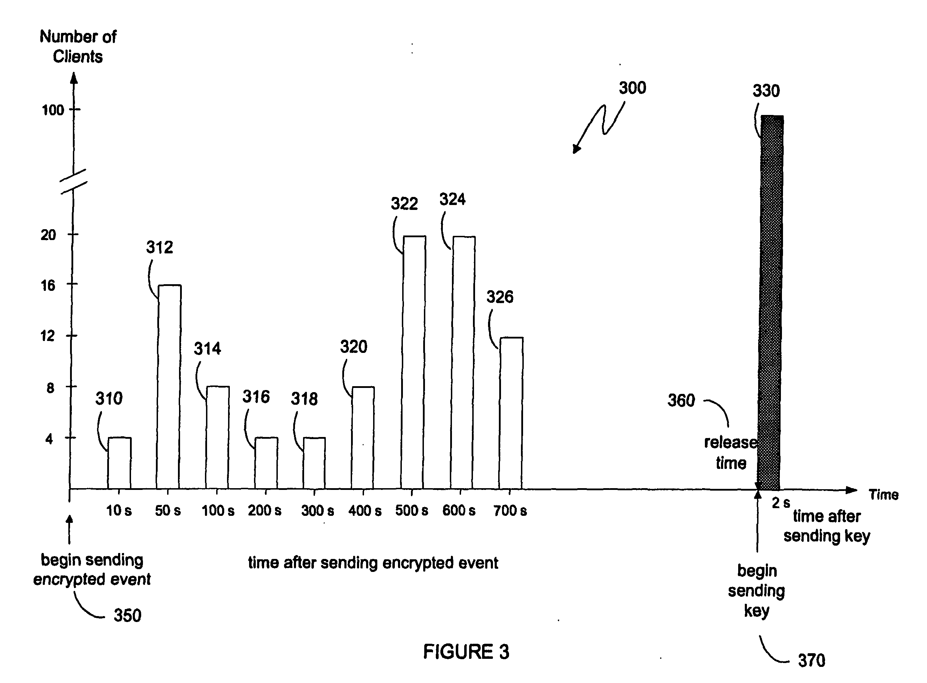

Turning to Figure 3, a temporal series of events contemplated by the present invention is shown. Bar graph 300 represents a particular server's group of clients. So, for example, the graph can represent trusted edge server 221 having both narrowband clients 50 and broadband clients 150 connected to it, or external (non-trusted) server 232 also having both narrowband clients 50 and broadband clients 150 connected to it. While Figure 2 only illustrates a few such clients connected to the servers 221 and 232, it is understood that many more can be connected through similar network connections. On bar graph 300, the times for delivery, which would normally be a continuous function, have been approximated to fall into the categories shown. Thus, the first group of clients 310 shown furthest to the left will receive the message within the time range of approximately 5 s to 15 s, the second group 312 will receive the message within the time range 40s to 60s, and so forth. It is important to note that the time show in bar graph 300 is not incremented linearly. This is because the transmission times are merely offered as an illustration of the present invention.

As can be seen from bar graph 300, the server shown has approximately 100 clients connected to it, including broadband clients and narrowband clients. The bar graph 300 begins at a time 350 when the server begins sending an encrypted event. The server can begin sending the encrypted event at time 350 for any number of reasons. For example, time 350 may be the first time at which the server received the encrypted event from the originating server, such as originating server 210 show in Figure 2. Alternatively, time 350 may be the first time that the server has completed encrypting the event, if it received the event in an unencrypted form from the originating server. Also, the server could have begun sending the encrypted event at time 350 because of an explicit instruction from the originating server. It is important to note that, because the transmission of the encrypted event need not wait for a particular time, both trusted edge servers and non-trusted servers can be used to distribute the event.

The first set of clients 310 to receive the event, do so approximately 10 seconds after time 350, while the last set of clients 326 receives the event in approximately 700 seconds. As can be seen by such a large variation, an unencrypted event simply sent to the clients at the release time would result in some clients, such as clients 326, not receiving the event until more than 11 minutes after the first clients, such as clients 310, had already received the event. If the event were the release of government economic data, the clients 310 would have had plenty of time to profit off of clients 326, which would not yet have received the information. As will be appreciated by those skilled in the art, bar graph 300 illustrates the distribution of a relatively small event, as it could be downloaded by broadband clients in as little as 10 seconds. For a larger event, such as a video showcasing new products, even the fastest clients 310 might not receive the event for a number of minutes and the slowest clients 326 could take hours to receive the event.

As illustrated in Figure 3, the server began sending the encrypted event at time 350 which was sufficiently in advance of the release time 360 for every client to have received the encrypted event. Then at a time 370, which can be either equal to time 360, as shown in Figure 3, or a later time, as will be described further below, the server can send the key to decrypt the encrypted event sent at time 350. As will be recognized by those skilled in the art, it is very difficult to perform a function exactly at a given time, since all computing devices operate in discrete cycles. Nevertheless, for purposes of the present invention, a time immediately after the release time 360 is appropriately considered equal to the release time 360. Because of the small size of the key, there will be almost no variation in the time it takes to receive the key, even for narrowband clients. Thus, as shown in Figure 3, all of the clients 330 are likely to receive the key nearly simultaneously. The set of clients 330 illustrates the same 100 clients which received the encrypted event in sets 310 through 326, except that at time 370 those clients are sent additional data, namely the decryption key, and they all receive it within two seconds, as shown by the bar 330. Thus, each client will first receive access to the information contained within the event, by using the decryption key to decrypt the event, at approximately the same time soon after the release time 360.

Because the event is encrypted, both a trusted edge server, such as trusted edge server 221, and a non-trusted server, such as non-trusted server 232, can be used to distribute the event prior to the release time 360. However, as will be shown in more detail below, if a decrypted, or unencrypted event is to be transmitted, the event can be held by trusted edge servers prior to the release time 360. A non-trusted server, however, may release the event prior to the release time. For an encrypted event, no unfairness will result due to a non-trusted server releasing the event prior to a release time, as the clients will not have the key necessary to access the information contained in the event. However, for a decrypted or unencrypted event, a release prior to the release time by individual servers may result in unequal access to the information contained in the event. Thus, as can be seen, data can be sent to clients, such as clients 50 and 150 as soon as it is available. When such data includes decryption keys, unencrypted events, or other data that will allow the clients to receive access to the information contained within an event, it can be held at the closest trusted server, to be released when appropriate. A non-trusted server may not be trusted to hold the data until an appropriate time for it to be released. As explained above, the closest trusted server is the trusted edge server.

The decryption key can be sent by a key server. The key server can be any server sending the key and can include the originating server, one or more trusted edge servers, a specialized central key server, or distributed group of specialized key servers, or any combination thereof. The central key server, or distributed specialized key servers, can also be part of the network environment 200, and can transmit the key directly to the clients at time 370, or can distribute the key to the trusted edge server 221 at a time prior to time 370 and provide instructions regarding the key send time. Non-trusted server 232, however, can be sent the key at time 370, rather than prior to time 370 because server 232 cannot be trusted to hold the key until time 370. To ensure that the key arrives as efficiently as possible to as many clients as possible, it is useful to transmit the key from multiple servers, such as those above, using many different network paths to deliver the key to the clients. By using a multitude of paths, the risk that any single path may become congested, and delay the receipt of the key is reduced. Because, as will be described below, the transmission of the key can be dependent on the receipt of the encrypted event by the clients, communication between the servers and the central key server or communication between the servers and the network of key servers is contemplated to coordinate the sending of the key to the clients.

The encryption used for the event can be any one or combination of popular encryption methods, including the Data Encryption Standard (DES), Secure And Fast Encryption Routine (SAFER), International Data Encryption Algorithm (IDEA), and any of the Advanced Encryption Standard (AES) candidates, such as Twofish, SERPENT, RC6, and MARS. The present invention contemplates the use of any encryption method which can be decrypted by one or more decryption keys that are relatively small in size, such that there is not a great discrepancy in transmission times to the various broadband and narrowband clients.

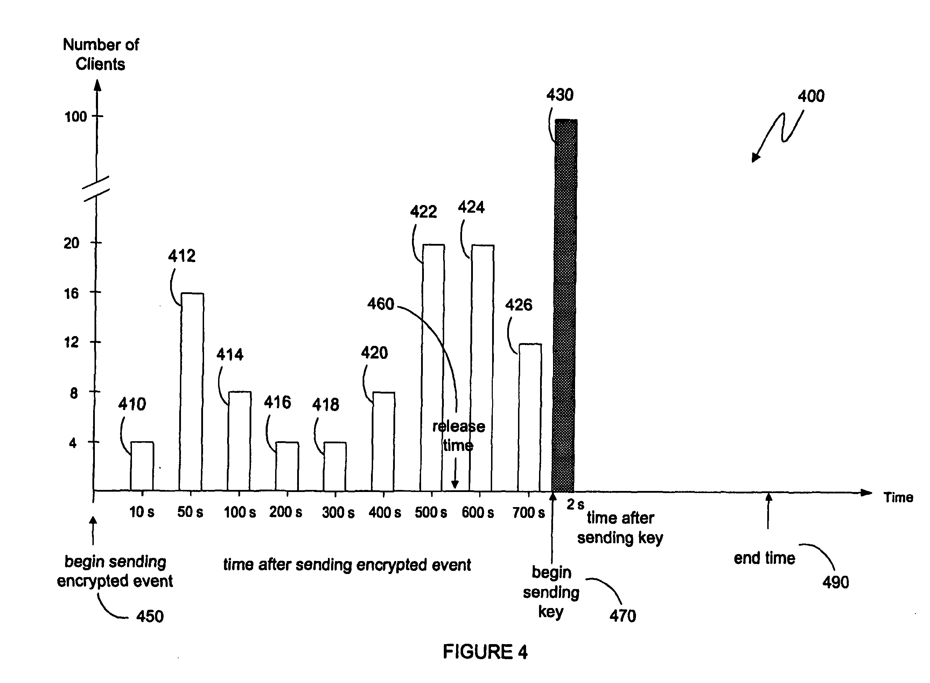

Turning to Figure 4, an event distribution is shown as bar graph 400. As in Figure 3, the server can be either a trusted edge server, such as trusted edge server 221, or, because the event being distributed is encrypted, a non-trusted server, such as non-trusted server 232. As can be seen, the time 450 at which the server began sending the event was not sufficiently prior to release time 460 to allow each client to receive the encrypted event. Time 450 may be dependent on the time at which the event was received by the server from the originating server. Because of the reduced time between when the server began sending the encrypted event at time 450 and the release time 460, clients 424 and 426 have not yet completed receipt of the encrypted event at the release time. In such a situation, the present invention contemplates delaying the transmission of the key until the clients have all received the encrypted data. However, the transmission of the key should not be delayed to such an extent that the key is received after the end time 490. Furthermore, considerations of practicality can also be taken into account. Thus, even though a small percentage of users have not yet finished receiving the encrypted data, the key can be transmitted to allow the vast majority of users to receive the data at a time that is closer to the release time. Such considerations are especially important in a network having multiple servers to provide for a fair distribution of the event across the whole network, as will be shown in more detail below.

As illustrated in Figure 4, the present invention contemplates sending the decryption key at a time 470 that is after the release time 460 and after the last group of clients 426 has finished receiving the encrypted event. The time 470 at which the key is sent is also sufficiently prior to the end time 490 so that every client 430 can receive the key prior to the end time. While Figure 4 illustrates time 470 at which the key is sent to occur soon after the last group of clients 426 has received the encrypted event, the key can be sent at any time sufficiently prior to the end time 490 to ensure that every client, or as many clients as possible, receive the key and are, thereby, granted access to the information contained in the event prior to the end time 490.

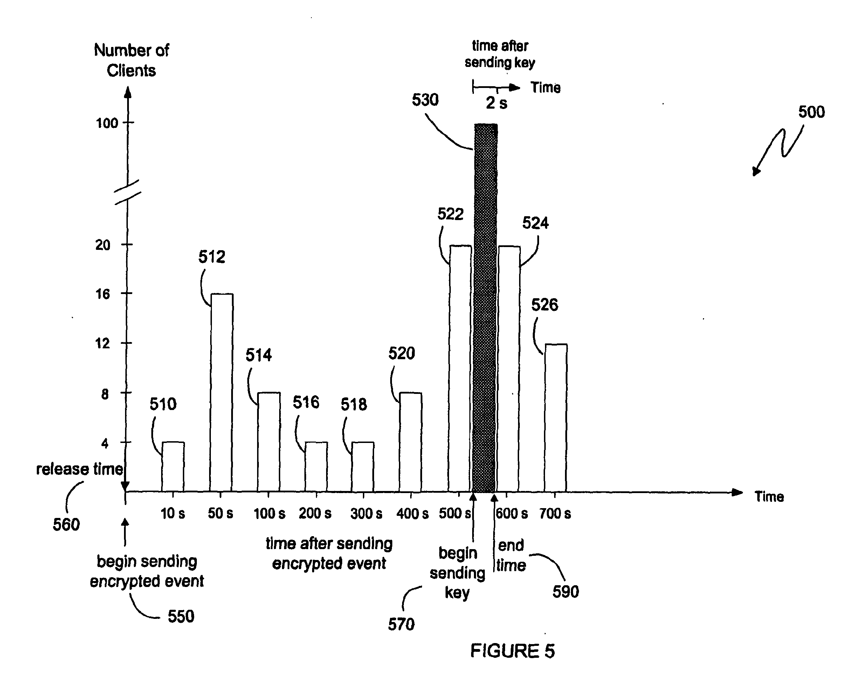

Turning to Figure 5, an event distribution, shown as bar graph 500, illustrates another transmission sequence contemplated by the present invention. As shown in Figure 5, the encrypted event was still being received by the set of clients 524 and 526 even after the end time 590. The servers, again including trusted edge servers and non-trusted servers, did not begin sending the encrypted event until time 550, which was too late to allow all of the clients to receive the encrypted event prior to the end time 590. Again, time 550 may have been dictated by external factors, such as the time at which the servers received the event from the originating server. In Figure 5, send time 550 is shown as being equivalent to the release time 560, but the send time 550 can be either prior to or after the release time 560 and can still result in sets of clients not completing their receipt of the encrypted event until after the end time 590.

In such a situation, the present invention contemplates that the trusted edge server can wait as long as possible to send the decryption key to ensure that as many clients as possible have finished receiving the encrypted event. Thus, at a time 570, sufficiently prior to the end time 590 to allow the key to be received by the clients, the trusted edge server can begin sending the key. As is shown in Figure 5, the trusted edge server can begin sending the key at time 570, before clients in sets 524 and 526 have completed receiving the encrypted data. By the end time 590, each of the clients has received the decryption key, but clients 524 and 526 need to complete receiving the encrypted event before they can use the key to access the data sent in the event. However, the sets of clients 510 through 522 have already received the encrypted event prior to the transmission of the key at time 570, and are able to access the data contained therein before the end time 590. Additionally, clients 510 through 522 each received this access to the data nearly simultaneously, providing for as fair a distribution of the information as possible given the latencies of the clients connected to the trusted edge server.

It is possible that some of the clients 50 and 150 of the servers shown in Figure 2 may not have sufficient storage space or processing power with which to store the encrypted event or decrypt it. Additionally, the ability of the clients to store and decrypt the event may vary between events. For example, a relatively small event, such as the release of government economic data, can be easily stored and decrypted, and it is likely that many clients will have sufficient storage space and processing power. However, for a digital movie, or other large event, many clients may not have sufficient storage space or processing power, including those that were able to accommodate the smaller event.

Thus, the present invention contemplates that a server can either send an encrypted event, to be followed with a decryption key, or a trusted edge server can decrypt the event locally and transmit a decrypted version of the event. Alternatively, if the originating server sends an unencrypted event, the trusted edge server can not encrypt the event and send the unencrypted event to those clients lacking storage or processing power. As will be known to those skilled in the art, the unencrypted event contains the same information as the decrypted event. To ensure integrity of the event, the clients receiving the decrypted event should not receive it prior to the release time. Thus, the trusted edge server can hold the decrypted event until the release time, or the trusted edge server can determine the latency to the clients that require the server to send the decrypted event, and begin sending the decrypted event prior to the release time so that those clients receive the decrypted event at the release time.

Returning to Figure 2, trusted edge server 221 has shown connected to it a personal computing device 150 connected via a broadband connection, and two additional personal computing devices 50 connected via a narrowband connection. If the two personal computing devices 50 lack sufficient storage space and processing power to store and decrypt the encrypted event, the encrypted event can be decrypted by the trusted edge server 221 and the decrypted event can be sent to computing devices 50.

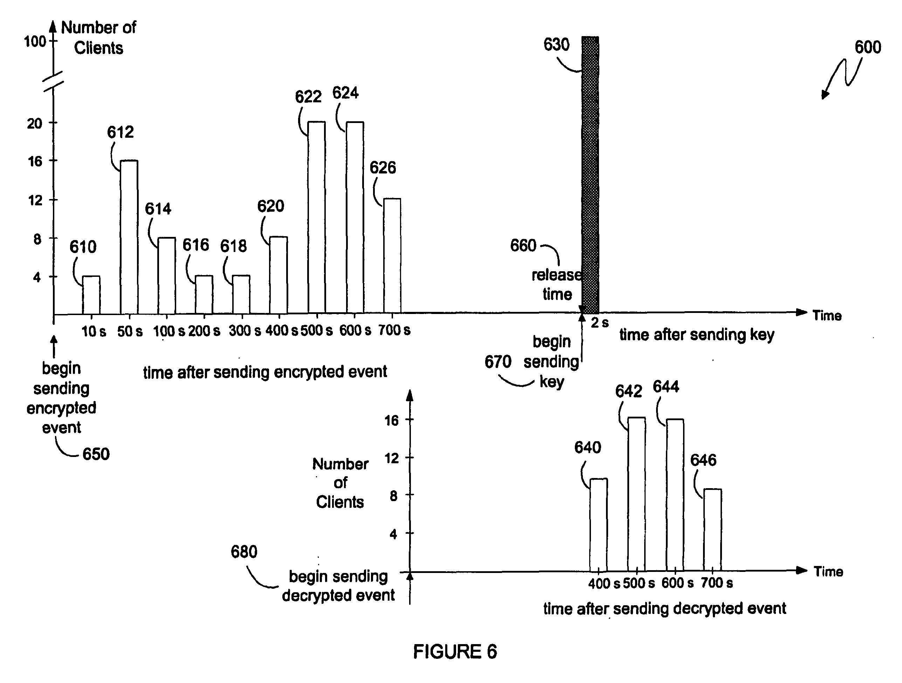

Figure 3, above, illustrated a transmission of the encrypted event to 100 clients of a server, such as trusted edge server 221. While Figure 3 contemplated the use of a non-trusted server, because the event being sent to the clients was encrypted, Figure 6 contemplates the use of a trusted edge server. However, as shown in Figure 2, trusted edge servers, such as trusted edge servers 220 and 222 can communicate with clients through additional, non-trusted servers, such as non-trusted servers 230 and 231. The trusted edge servers 220 and 222 are as far as the unencrypted event can travel between the originating server 210 and ultimate client destinations, while maintaining a fairness of distribution by sending the unencrypted event at appropriate times, as will be shown below. Figure 6 is also meant to be illustrative only and illustrates a transmission contemplated by the present invention to 150 clients connected to trusted edge server 221. Specifically, Figure 6 illustrates the sending of the encrypted event and the decryption key to the same 100 clients shown in Figure 3, and, in addition, illustrates the sending of the decrypted event to 50 new clients that do not have sufficient storage or processing power.

Figure 6 contains bar graph 600, showing the dissemination of information to 100 clients that can store and decrypt the encrypted event and an additional 50 clients that cannot, and rely on a decrypted event from the trusted edge server. As explained above in connection with Figure 3, sets of clients 610 through 626 receive an encrypted event at some time after it was sent by the server at time 650. Then at time 670, the trusted edge server can distribute the decryption key. Thus, as shown in illustrative example of Figure 6, all of the 100 clients that have the capability to store and decrypt the encrypted event have gained access to the information contained within the event at approximately the same time: two seconds after the trusted edge server sent the key at time 670.

For the remaining 50 clients that do not have the capability to store and decrypt the encrypted event, the trusted edge server can decrypt the event and send a decrypted event at time 680. In the illustrative example of Figure 6, time 680 was selected by the trusted edge server such that the first set of clients 640 to receive the decrypted event did not do so prior to the release time 660, but still received the decrypted event as close to the release time 660 as possible. Additional sets of clients 642, 644, and 646, can receive the decrypted event at some time after the release time 660, depending on the latency of their connection the trusted edge server. As can be seen, for the 50 clients that could not store and decrypt the encrypted event, the trusted edge server was still able to provide access to the information stored in the event by sending a decrypted event, and was able to do so in a relatively fair manner, as each of the 50 clients received the decrypted event soon after the release time 660 together with the original 100 clients of Figure 3.

The trusted edge server of Figure 6 can determine the time 680 at which to begin sending the decrypted event through an estimation of the latency of the connection to the clients. As is known by those of skill in the art, latency is a measure of ability of a connection to transfer data. The present invention contemplates that the trusted edge server can maintain a database containing the communication history with each client, or with a representative set of clients. Such a database can be used to determine an expected time for transmission based on empirical data. The database can contain measures of latency, such as: data rates, peak data rates, congestion information, connection failures, and other such network information gleaned from prior communications with the clients. For example, an average of the historical data rates could be used, or a recent trend in the data rates could be used to extrapolate an estimate for the expected time for transmission. Alternatively, the data rate information can be used in conjunction with additional information to derive or improve upon the estimated transmission time. In addition to an expected time for transmission based on empirical observation, the trusted edge server can use networking functions to determine a theoretical time for transmission. For example, the trusted edge server can "ping" a client or set of clients, and measure the time it takes for the clients to respond to determine an expected transmission time. Alternatively, a more advanced networking environment may have more advanced networking protocols that can provide additional information to the trusted edge server regarding the latency of the connection to the clients.

By subtracting the release time from the estimated time of transmission, the trusted edge server can determine a send time 680 at which to begin sending the decrypted event that will allow the clients receiving the decrypted event to receive it at the release time. As will be known by those skilled in the art, the estimated time of transmission can be determined by dividing the size of the event by the latency of the connection.

However, because the latency of a connection can vary, and because, in some situations it may be vitally important that no client receive access to the information conveyed by the event prior to the release time, the trusted edge server can determine the send time by using a minimum expected time for transmission; thereby ensuring that, even with optimal conditions, the decrypted event will not arrive at the clients prior to the release time. A minimum expected time for transmission can be based on the lowest data rate stored in a database, or it can be based on data acquired through network functions with an appropriate multiplier to account for unforeseen events. For example, the minimum expected time for transmission can simply be half the expected time for transmission derived using the theoretical calculations. Using the minimum expected transmission time, the trusted edge server can determine a send time sufficiently late that no clients receive access to the information contained in the event prior to the release time.

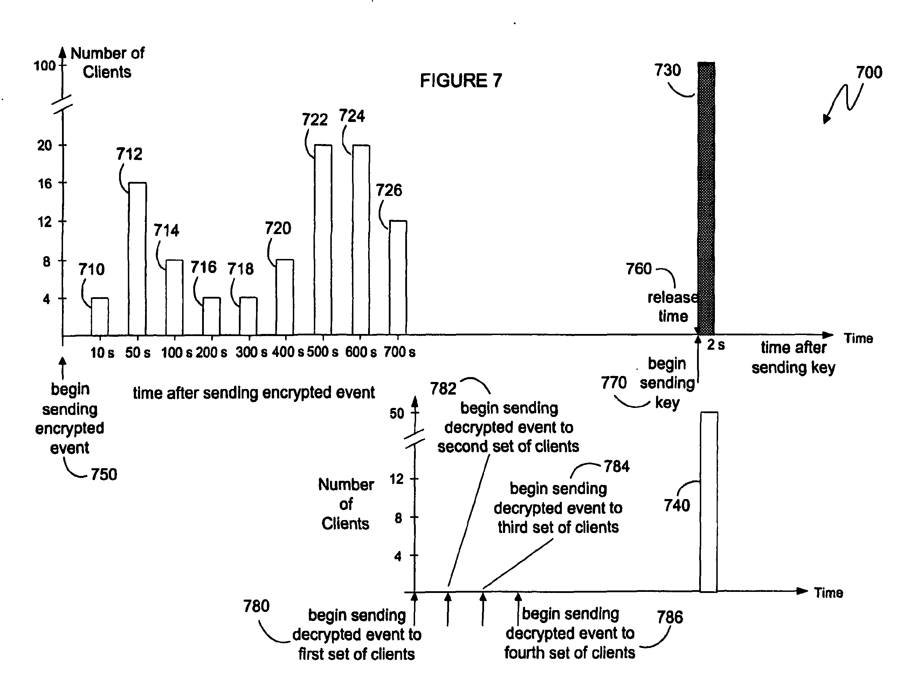

Figure 7 illustrates another possibility contemplated by the present invention for providing clients that have minimal storage or processing capability with access to the information contained within an event. The bar graph 700 illustrates a similar situation to the bar graph 600 described above in connection with Figure 6. However, in Figure 7, the trusted edge server can send the decrypted event at varying times 780 through 786 such that all of the clients that requested the decrypted event receive it at appropriately the same time 740. Thus, to the set of clients 640, that received the decrypted event in the least amount of time in Figure 6, the trusted edge server can begin sending the decrypted event at time 786. To the second fastest set of clients 642, the trusted edge server can begin sending the decrypted event at time 784, and similarly, the trusted edge server can begin sending the event to clients 644 at time 782 and to clients 646 at time 780. By staggering the sending time to individual clients or groups of clients, the trusted edge server can provide the decrypted event almost simultaneously to the clients that require it at time 740 shown in Figure 7.

The trusted edge server of Figure 7 can determine an approximate connection latency between a client or a group of clients though either the empirical or theoretical methodologies discussed above, and can use that estimate to determine at which time to being sending the decrypted event to various clients. Additionally, using the approach illustrated above whereby the trusted edge server can send the decrypted event in advance of the release time 760, the trusted edge server can also provide that the clients in set 740 receive access to the information contained in the event at approximately the same time as the clients in set 730. Additional information regarding the pre-release time transmission of a decrypted event described above and the temporally staggered transmission to selected clients can be found in co-pending application entitled "Time-Window-Constrained Multicast using Connection Scheduling" (Attorney Docket Number 213530), filed concurrently with the present application, and which has already been incorporated by reference in its entirety.

Returning to Figure 2, network connections 218 and 228 are shown as direct connections, but, as will be clear to those skilled in the art, such connections can comprise any number of routers, trusted servers, non-trusted servers, and other network paths. The present invention contemplates an overlay network in that the trusted servers and connections referred to below do not necessarily require a particular hardware configuration, or any physical limitations, but can be implemented in software running on existing hardware. As a result, the network 200 of Figure 2, to be described in further detail below, can represent merely the software overlay on an already existing physical network, or it can represent the physical structure of a new network.

Connections 218 to trusted edge servers, shown in Figure 2, can comprise intermediate non-trusted servers. As will be explained in more detail below, an encrypted event is sent from the originating server 210 throughout network 200 prior to the release time. Because the event is encrypted, it can be passed through non-trusted servers in the connection paths 218 to the trusted edge servers without compromising the integrity of the event distribution. However, if the decryption key is to be provided to the trusted edge servers 220, 221, and 222 prior to the release time, then protective measures can be used to ensure that the non-trusted servers in the connection paths 218 do not obtain the key and distribute it to clients prior to the release time. Examples of protective measures that can be used with the present invention include the encryption algorithms that enable Virtual Private Networking (VPN) and the Point-to-Point Tunneling Protocol (PPTP), which are well known in the art. In such a manner, the originating server 210 can securely communicate sensitive information, including the decryption key and a decrypted or unencrypted event, as will be explained in detail below, to the trusted edge servers without simultaneously revealing the sensitive information to non-trusted server in the connection paths 218.

The network 200 of Figure 2 illustrates trusted edge server 222 as having broadband clients 150 connected to it. Thus, it is likely that trusted edge server 222 can provide the encrypted event prior to the release time, such as illustrated in Figure 3, and that the broadband clients will have the capability to store and decrypt the event. However, it is possible that trusted edge server 220, illustrated as having only narrowband clients 50 connected to it, will not be able to send the encrypted event at a sufficiently early send time so that each of the narrowband clients 50 will have received it prior to the release time, as shown in Figure 4. Given such a network situation, the present invention contemplates communication between trusted edge server 222 and 220 or between all of the trusted edge servers 220, 221, 222 and the originating server 210 to coordinate the release of the decryption key. As described above in connection with Figure 4, the trusted edge server can transmit the decryption key at any time after the release time 460 and the end time 490. A key send time of 470 can, therefore, correspond to the key send time of other trusted edge servers. Thus, trusted edge server 222, even though it has already delivered the encrypted event prior to the release time, such as shown in Figure 3, can delay the key send time 370 to correspond to the key send time 470 as shown in Figure 4, which is after the release time.

Coordinating messages, or the like, can be sent between trusted edge servers or between the trusted edge servers and the originating server to coordinate the transmission of the key. Alternatively, the coordination can be performed by the central key server described above. The central key server can receive messages from the trusted edge servers, or from the clients themselves, indicating the extent to which the clients have received the encrypted event. Based on that information, the central key server can determine a coordinated key send time and send the key to the clients at the coordinated key send time, or can send it to the trusted edge servers to pass onto the clients, either by sending it just prior to the coordinated key send time, or by providing instructions to the trusted edge server to send the key at the coordinated key send time. In addition, messages coordinating the time settings of each trusted edge server and originating server can also be sent to prevent an improper time setting from causing an inopportune key transmission. The central key server, or a network of key servers can also coordinate their time with the trusted edge servers. One method for coordinating the time settings, or clocks, of all of the servers is to use a network time protocol to synchronize the servers to a standard time, such as that provided by a governmental standards setting agency. As a fail safe, each trusted edge server can send the key as soon as its clients are ready, provided the release time has passed, if that trusted edge server does not receive the coordinating messages.

The present invention also contemplates key send time coordination between trusted edge servers, the specialized central key server, specialized distributed key servers, the originating server, or combinations thereof even when the trusted edge server must decrypt the event and transmit the decrypted event. For example, returning to the network environment of Figure 2 described above, trusted edge server 221 may have clients connected to it that require the trusted edge server 221 to decrypt the event and transmit the decrypted event in a manner such as that shown in Figures 6 or 7, described above. As shown in Figures 6 and 7, the trusted edge server can begin sending the decrypted event at a time 680 or at a series of times 780, 782, 784, and 786. Furthermore, as described above, the send time can be calculated based upon the estimated latency of the connection between the trusted edge server and the client. However, the above calculations generally provide access to the decrypted event at the release time. If the trusted edge servers or the originating server have coordinated the sending of the key at a time after the release time, the trusted edge servers sending the decrypted event can use this coordinated time, instead of the release time, in the calculations to determine the send time of the decrypted event. In such a manner the clients receiving the decrypted event do not receive access to the information contained within the event prior to the clients that had received the decrypted event and were waiting for the key.

One method for coordinating the transmission of the key and the decrypted data between the trusted edge servers can be based on the receipt time at which the event is delivered to the trusted edge servers from an originating server such the originating server 210. If the trusted edge servers do not receive the event from the originating server sufficiently early, the transmission of the encrypted event to the clients may not complete prior to the release time, such as in the situation illustrated in Figure 4. However, through empirical or theoretical estimation, such as that described above, the trusted edge servers can obtain an estimated time for transmission of the connection to their clients and can, thereby estimate the transmission time required to complete transmission of the encrypted event to all, or a majority, of the clients. The coordinated time for sending the decryption key can then be selected to be later than this estimated time at which the encrypted event transmission will complete and yet still be prior to the end time. Once the coordinated time is selected, the trusted edge server sending the decrypted event can use this time, rather than the release time, to determine when to begin sending the decrypted event, in the manner described in more detail above.

The present invention contemplates the use of efficient network protocols for transmitting data, including the encrypted event, the decrypted event, and the decryption key, across the network environment 200. One such protocol is a multicasting protocol, common on networks using the Internet Protocol (IP). As will be known by one of skill in the art, multicast traffic is sent to a single destination IP address, but is received and processed by multiple IP hosts, regardless of their location in the network environment 200. Because traffic is sent to a single destination IP address, multicasting avoids the need to send an individual copy to each client or each trusted edge server. However, unlike a broadcast, multicasting allows only those network devices listening to the specific IP multicast address to receive and process the information. Generally, a host group is defined as the set of hosts listening on a pre-determined IP multicast address. There are no limitations to the size of the host group, and its membership can change, and is otherwise dynamic. Furthermore, a host group can span across routers and multiple network segments, and it is not required that a computing device be a member of the host group to multicast information to the pre-determined IP multicast address. For an application to receive multicasts, it can inform the appropriate networking layers that it will be receiving multicasts at the pre-determined IP multicast address.

Because of the nature of multicasting, however, it is preferable, in situations where timing is important, that all of the hosts receive the transmitted data without the need to request a retransmission. One method for increasing the chances that the data is properly received is to use redundancy, or other error correction algorithms. For small elements of data, such as the decryption key, redundancy may be the simplest solution. For example, a decryption key can be on the order of a few kilobytes or less. Even if a 10-fold redundancy was implemented, the size of the message increases to approximately 30 kilobytes. Even with a narrowband connection, such as a conventional analog modem operating at 56 kbps or even 33.6 kbps, 30 kilobytes can take as little as a 10 seconds to download. Thus, even by using great deal of redundancy, by conventional standards, the transmission of the decryption key is sill achieved within a small span of time.

The small size of the key allows multiple servers to transmit the key throughout the network 200 without significantly affecting the latency of the network. By utilizing multiple server to transmit the key, multiple network paths can be used to deliver the key to each of the clients. Because each client can receive the key through multiple network paths, a congested node, or other network bottleneck is significantly less likely to affect the transmission time of the key to each of the clients, since the client will likely receive at least one key through an uncongested path.

As can be seen, the present invention provides for a fair distribution of an event to clients connected to trusted servers despite differences in the clients' bandwidth. A trusted edge server can either encrypt the event and distribute it to the clients for decryption at a release time, or prior to an end time via a transmitted key, or the trusted edge server can begin transmitting a decrypted version of the event prior to the release time so that it arrives at the clients at the release time, or prior to the end time. In such a manner as many clients as possible are provided access to an event at approximately the same time.

All of the references cited herein, including patents, patent applications, and publications, are hereby incorporated in their entireties by reference.

In view of the many possible embodiments to which the principles of this invention may be applied, it should be recognized that the embodiments described herein with respect to the drawing figures are meant to be illustrative only and should not be taken as limiting the scope of invention. For example, those of skill in the art will recognize that the elements of the illustrated embodiments shown in software may be implemented in hardware and vice versa or that the illustrated embodiments can be modified in arrangement and detail. Therefore, the invention as described herein contemplates all such embodiments as may come within the scope of the following claims and equivalents thereof.

## Claims

1. A method for fairly distributing an event across a network environment to at least a first and a second client using a multicasting protocol, the event having information intended to be released not earlier than a pre-determined release time (360, 460, 560, 660, 760), the method comprising:
sending (350, 450, 550, 650, 750) an encrypted event from an originating server to the at least two clients prior to the release time; and
sending (370, 470, 570, 670, 770) a decryption key from a key server to the at least two clients after the pre-determined release time, thereby allowing the at least two clients to decrypt the data approximately simultaneously.

2. The method of claim 1, wherein the sending the decryption key occurs immediately after the release time.

3. The method of claim 1, wherein the sending the decryption key occurs after all of the at least two clients have completed receiving the encrypted event.

4. The method of claim 1, wherein the event is intended to be released prior to a pre-determined end time, and wherein the sending the decryption key occurs prior to all of the at least two clients completing receipt of the encrypted event if all of the at least two clients will complete receipt of the encrypted event after a last key send time, the last key send time being a sufficient time prior to the end time to allow for transmission of the key to all of the at least two clients.

5. The method of claim 1 further comprising:
sending an unencrypted event from the originating server to a trusted edge server prior to the release time, wherein the trusted edge server is a server, in a communications path between the originating server and a connected client, that can be trusted not to release information prior to an appropriate time; and
sending the unencrypted event to a third client at a third client send time, the thrid client send time allowing the unencrypted event to be received by the third client at approximately the same time as the decryption key is received by the at least two clients.

6. The method of claim 5 further comprising:
sending the unencrypted event to a fourth client at a fourth client send time, the fourth client send time allowing the unencrypted event to be received by the fourth client at approximately the same time as the decryption key is received by the at least two clients.

7. The method of claim 5, wherein the third client send time allows the unencrypted event to be received by the third client or a fourth client, whichever is expected to receive it first, at approximately the same time as the decryption key is received by the at least two clients, the method further comprising:
sending the unencrypted event to the fourth client at the third client send time.

8. The method of claim 1, wherein the key server comprises two or more key servers.

9. The method of claim 1, wherein the sending the decryption key occurs at a coordinated key send time, wherein the coordinated key send time is based on when all clients in the network environment receive the encrypted event.

10. The method of claim 1, wherein the sending the decryption key includes multicasting a key message comprising at least one copy of the decryption key.

11. The method of claim 1, wherein sending the decryption key comprises sending the decryption key to the at least two clients after all of the at least two clients have received the encrypted event.

12. The method of claim 11 further comprising:
sending an unencrypted event to a trusted edge server, wherein the trusted edge server is a server in the network environment that can be trusted not to release information prior to an appropriate time; and
sending the unencrypted event to a third client at a third client send time, the third client send time allowing the unencrypted event to be received by the third client at approximately the same time as the decryption key is received by the at least two clients.

13. The method of claim 11 further comprising:
sending an encrypted event to a trusted edge server, wherein the trusted edge server is a server in the network environment that can be trusted not to release information prior to an appropriate time;
decrypting the encrypted event at the trusted edge server; and
sending a decrypted event from the trusted edge server to a third client at a third client send time, wherein the third client send time is a function of an expected time of transmission of the decrypted event to the third client and a third client arrival time at which the third client receives the decrypted event, the third client arrival time approximately the same time as the decryption key is received by the at least two clients.

14. The method of claim 13, wherein the expected time of transmission is determined by reference to a connection history between the trusted edge sever and the third client.

15. The method of claim 13, wherein the expected time of transmission is determined by reference to a result of network functions testing the latency between the trusted edge sever and the third client.

16. A computer-readable medium having computer-executable instructions for fairly distributing an event across a network environment to at least a first and a second client using a multicasting protocol, the event having information intended to be released not earlier than a pre-determined release time (360, 460, 560, 660, 760), the computer-executable instructions performing steps comprising:
sending (350, 450, 550, 650, 750) an encrypted event from an originating server to the at least two clients prior to the release time; and
sending (370, 470, 570, 670, 770) the decryption key from a key server to the at least two clients after the pre-determined release time, thereby allowing the at least two clients to decrypt the data approximately simultaneously.

17. The computer-readable medium of claim 16, wherein the sending the decryption key occurs after the at least two clients have completed receiving the encrypted event.

18. The computer-readable medium of claim 16, wherein the computer-executable instructions perform further steps comprising:
sending an unencrypted event from the originating server to a trusted edge server prior to the release time, wherein the trusted edge server is a server, in a communications path between the originating server and a connected client, that can be trusted not to release information prior to an appropriate time; and
sending the unencrypted event from the trusted edge server to a third client at a third client send time, the third client send time allowing the unencrypted event to be received by the third client at approximately the same time as the decryption key is received by the at least two clients.

19. The computer-readable medium of claim 18, wherein the computer-executable instructions perform further steps comprising:
sending the unencrypted event to a fourth client at a fourth client send time, the fourth client send time allowing the unencrypted event to be received by the fourth client at approximately the same time as the decryption key is received by the at least two clients.

20. The computer-readable medium of claim 18, wherein the third client send time allows the unencrypted event to be received by the third client or a fourth client, whichever is expected to receive it first, at approximately the same time as the decryption key is received by the at least two clients, the computer-executable instructions further performing steps comprising:
sending the unencrypted event to the fourth client at the third client send time.

21. The computer-readable medium of claim 16, wherein the key server comprises two or more key servers.

22. The computer-readable medium of claim 16, wherein the sending the decryption key occurs at a coordinated key send time, wherein the coordinated key send time is based on when all clients in the network environment receive the encrypted event.

23. The computer-readable medium of claim 16, wherein sending the decryption key comprises sending the decryption key to the at least two clients after all of the at least two clients have received the encrypted event.

24. The computer-readable medium of claim 23, wherein the computer-executable instructions perform further steps comprising:
sending the encrypted event to a trusted edge server, wherein the trusted edge server is a server in the network environment that can be trusted not to release information prior to an appropriate time;
decrypting the encrypted event at the trusted edge server; and
sending a decrypted event from the trusted edge server to a third client at a third client send time, wherein the third client send time is a function of a expected time of transmission of the decrypted event to the third client and a third client arrival time at which the third client receives the decrypted event, the third client arrival time approximately the same time as the decryption key is received by the at least two clients.

25. A system for fairly distributing an event across a network environment using a multicasting protocol, the event having information intended to be released not earlier than a pre-determined release time (360, 460, 560, 660, 760), the system comprising:
an originating server (210);
a key server; and
at least a first and a second client (50, 150);
wherein the originating server is arranged to send an encrypted event to the at least two clients prior to the release time, and the key server is arranged to send the decryption key to the at least two clients after the pre-determined release time, thereby allowing the at least two clients to decrypt the data approximately simultaneously.

26. The system of claim 25, wherein the key server is arranged to send the decryption key after all of the at least two clients have completed receiving the encrypted event.

27. The system of claim 25, further comprising a trusted edge server, wherein the trusted edge server is a server, in a communications path between the originating server and a connected client, that can be trusted not to release information prior to an appropriate time.

28. The system of claim 27, further comprising a third client, wherein the originating server is arranged to send an unencrypted event to the trusted edge server, and the trusted edge server is arranged to send the unencrypted event to the third client at a third client send time, the third client send time allowing the unencrypted event to be received by the third client at approximately the same time as the decryption key is received by the at least two clients.

29. The system of claim 27, the originating server further being arranged to send an unencrypted event to the trusted edge server, the trusted edge server being arranged to encrypt the unencrypted event, and the trusted edge server being arranged to send the encrypted event to the at least two clients.

30. The system of claim 27, further comprising a third client, wherein the originating server is arranged to send the encrypted event to the trusted edge server, the key server is arranged to send the decryption key to the trusted edge server, the trusted edge server is arranged to decrypt the encrypted event, and the trusted edge server is arranged to send the decrypted event to the third client at a third client send time, the third client send time allowing the decrypted event to be received by the third client at approximately the same time as the decryption key is received by the at least two clients.

31. The system of claim 25, wherein the key server is arranged to send the decryption key at a coordinated key send time, wherein the coordinated key send time is based on when the at least two clients receive the encrypted event.

32. The system of claim 25, wherein the key server is arranged to multicast a key message comprising at least one copy of the decryption key.

33. The system of claim 25, wherein the originating server and the key server are implemented together in one single server.

34. The system of claim 33, further comprising a third client and a trusted edge server, the trusted edge server being a server that can be trusted not to release information prior to an appropriate time, and further wherein the trusted edge server is arranged to send an unencrypted event to the third client at a third client send time, the third client send time allowing the unencrypted event to be received by the third client at approximately the same time as the decryption key is received by the at least two clients.

35. The system of claim 33, further comprising a third client, and a trusted edge server, the trusted edge server being a server that can be trusted not to release information prior to an appropriate time, and further wherein the trusted edge server is arranged to receive an encrypted event, decrypt the encrypted event, and send the decrypted event to the third client at a third client send time, the third client send time allowing the decrypted event to be received by the third client at approximately the same time as the decryption key is received by the at least two clients.

36. The system of claim 35, wherein the second client send time is determined by reference to a connection history between the trusted edge server and the second client.

37. The system of claim 35, wherein the third client send time is determined by reference to a result of network functions testing a third client latency between the trusted edge server and the second client.

38. A trusted edge server (220 - 222) that is a server, in a multicast protocol communications path between an originating server and a at least a first and a second client, that can be trusted not to release information prior to an appropriate time (360, 460, 560, 660, 760), the trusted edge server comprising:
means for sending an encrypted event to the at least two clients (50) prior to a release time, wherein the event comprises information intended to be released not earlier than the release time; and
means for sending a decryption key to the at least two clients after the release time, thereby allowing the at least two clients to decrypt the data approximately simultaneously.

39. The trusted edge server of claim 38, wherein the sending the decryption key occurs after all of the at least two clients have completed receiving the encrypted event.

40. The trusted edge server of claim 38 further comprising:
means for decrypting the encrypted event; and
means for sending the decrypted event to a third client at a third client send time the third client send time allowing the decrypted event to be received by the third client at approximately the same time as the decryption key is received by the at least two clients.

41. The trusted edge server of claim 40, wherein the third client send time is determined by reference to a connection history between the trusted edge sever and the third client.

42. The trusted edge server of claim 40, wherein the third client send time is determined by reference to a result of network functions testing a third client latency between the trusted edge sever and the third client.

43. The trusted edge server of claim 38 further comprising:
means for sending an unencrypted event to a third client at a third client send time, the third client send time allowing the unencrypted event to be received by the second client at approximately the same time as the decryption key is received by the first client.

## Patentansprüche

1. Verfahren zur gerechten Verbreitung eines Ereignisses über eine Netzwerkumgebung zu mindestens einem ersten und einem zweiten Client unter Verwendung eines Multicasting-Protokolls, wobei das Ereignis Informationen aufweist, die vorgesehen sind, nicht eher als eine vorbestimmte Freigabezeit (360, 460, 560, 660, 760) freigegeben zu werden, wobei das Verfahren umfasst:
Senden (350, 450, 550, 650, 750) eines verschlüsselten Ereignisses von einem Ursprungs-Server zu den mindestens zwei Clients vor der Freigabezeit; und
Senden (370, 470, 570, 670, 770) eines Entschlüsselungsschlüssels von einem Schlüssel-Server zu den mindestens zwei Clients nach der vorbestimmten Freigabezeit, wobei es dabei den mindestens zwei Clients ermöglicht wird, die Daten ungefähr gleichzeitig zu entschlüsseln.

2. Verfahren nach Anspruch 1, wobei das Senden des Entschlüsselungsschlüssels sofort nach der Freigabezeit geschieht.

3. Verfahren nach Anspruch 1, wobei das Senden des Entschlüsselungsschlüssels sofort geschieht, nachdem alle der mindestens zwei Clients das Empfangen des verschlüsselten Ereignisses abgeschlossen haben.

4. Verfahren nach Anspruch 1, wobei es für das Ereignis vorgesehen ist, vor einer vorbestimmten Endzeit freigegeben zu werden, und wobei das Senden des Entschlüsselungsschlüssels geschieht, bevor alle der mindestens zwei Clients den Empfang des verschlüsselten Ereignisses abschliessen, wenn alle der mindestens zwei Clients den Empfang des verschlüsselten Ereignisses nach einer Zeit des Sendens des letzten Schlüssels abschliessen werden, wobei die Zeit des Sendens des letzten Schlüssels eine ausreichende Zeit vor der Endzeit ist, um die Übertragung des Schlüssels an alle der mindestens zwei Clients zu erlauben.

5. Verfahren nach Anspruch 1, das des Weiteren umfasst:
Senden eines unverschlüsselten Ereignisses von einem Ursprungs-Server zu einem zuverlässigen Rand-Server vor der Freigabezeit, wobei der zuverlässige Rand-Server ein Server in einem Datenübertragungspfad zwischen dem Ursprungs-Server und einem verbundenen Client ist, dem vertraut werden kann, keine Information vor einer geeigneten Zeit freizugeben; und
Senden des unverschlüsselten Ereignisses zu einem dritten Client zu einer dritten Client-Sendezeit, wobei die dritte Client-Sendezeit es erlaubt, das unverschlüsselte Ereignis durch den dritten Client zu ungefähr derselben Zeit zu empfangen, zu der der Entschlüsselungsschlüssel durch die mindestens zwei Clients empfangen wird.

6. Verfahren nach Anspruch 5, das des Weiteren umfasst:
Senden des unverschlüsselten Ereignisses zu einem vierten Client zu einer vierten Client-Sendezeit, wobei die vierte Client-Sendezeit es erlaubt, das unverschlüsselte Ereignis durch den vierten Client zu ungefähr derselben Zeit zu empfangen, zu der der Entschlüsselungsschlüssel durch die mindestens zwei Clients empfangen wird.

7. Verfahren nach Anspruch 5, wobei die dritte Client-Sendezeit es erlaubt, das unverschlüsselte Ereignis durch den dritten Client oder den vierten Client, von welchem auch immer erwartet wird, es zuerst zu empfangen, zu ungefähr derselben Zeit zu empfangen, zu der der Entschlüsselungsschlüssel durch die mindestens zwei Clients empfangen wird, wobei das Verfahren des Weiteren umfasst:
Senden des unverschlüsselten Ereignisses zu dem vierten Client zu der dritten Client-Sendezeit.

8. Verfahren nach Anspruch 1, wobei der Schlüssel-Server zwei oder mehr Schlüssel-Server umfasst.

9. Verfahren nach Anspruch 1, wobei das Senden des Entschlüsselungsschlüssels zu einer koordinierten Schlüssel-Sendezeit geschieht, wobei die koordinierte Schlüssel-Sendezeit darauf basiert, wann alle Clients in der Netzwerkumgebung das verschlüsselte Ereignis empfangen.

10. Verfahren nach Anspruch 1, wobei das Senden des Entschlüsselungsschlüssels ein Multicasting einer Schlüssel-Nachricht einschliesst, die mindestens eine Kopie des Entschlüsselungsschlüssels umfasst.

11. Verfahren nach Anspruch 1, wobei das Senden des Entschlüsselungsschlüssels das Senden des Entschlüsselungsschlüssels zu den mindestens zwei Clients, nachdem alle der mindestens zwei Clients das verschlüsselte Ereignis empfangen haben, umfasst.

12. Verfahren nach Anspruch 11, das des Weiteren umfasst:
Senden eines unverschlüsselten Ereignisses zu einem zuverlässigen Rand-Server, wobei der zuverlässige Rand-Server ein Server in eine Netzwerkumgebung ist, dem vertraut werden kann, keine Information vor einer geeigneten Zeit freizugeben; und
Senden des unverschlüsselten Ereignisses zu einem dritten Client zu einer dritten Client-Sendezeit, wobei die dritte Client-Sendezeit es erlaubt, das unverschlüsselte Ereignis durch den dritten Client zu ungefähr derselben Zeit zu empfangen, zu der der Entschlüsselungsschlüssel durch die mindestens zwei Clients empfangen wird.

13. Verfahren nach Anspruch 11, das des Weiteren umfasst:
Senden eines verschlüsselten Ereignisses zu einem zuverlässigen Rand-Server, wobei der zuverlässige Rand-Server ein Server in eine Netzwerkumgebung ist, dem vertraut werden kann, keine Information vor einer geeigneten Zeit freizugeben;
Entschlüsseln des verschlüsselten Ereignisses in dem zuverlässigen Rand-Server; und
Senden eines entschlüsselten Ereignisses von dem zuverlässigen Rand-Server zu einem dritten Client zu einer dritten Client-Sendezeit, wobei die dritte Client-Sendezeit eine Funktion einer erwarteten Übertragungszeit des entschlüsselten Ereignisses zu dem dritten Client und einer dritten Client-Ankunftszeit, zu der der dritte Client das entschlüsselte Ereignis empfängt, ist, wobei dritte Client-Ankunftszeit ungefähr dieselbe Zeit ist, zu der der Entschlüsselungsschlüssel durch die mindestens zwei Clients empfangen wird.

14. Verfahren nach Anspruch 13, wobei die erwartete Übertragungszeit durch Bezug auf eine Verbindungshistorie zwischen dem zuverlässigen Rand-Server und dem dritten Client ermittelt wird.

15. Verfahren nach Anspruch 13, wobei die erwartete Übertragungszeit durch Bezug auf ein Ergebnis von Netzwerkfunktionen, die die Verzögerung zwischen dem zuverlässigen Rand-Server und dem dritten Client testen, ermittelt wird.

16. Computer-lesbarer Datenträger, der Computer-ausführbare Instruktionen zur gerechten Verbreitung eines Ereignisses über eine Netzwerkumgebung zu mindestens einem ersten und einem zweiten Client unter Verwendung eines Multicasting-Protokolls aufweist, wobei das Ereignis Informationen aufweist, die vorgesehen sind, nicht eher als eine vorbestimmte Freigabezeit (360, 460, 560, 660, 760) freigegeben zu werden, wobei die Computer-ausführbaren Instruktionen Schritte ausführen, die umfassen:
Senden (350, 450, 550, 650, 750) eines verschlüsselten Ereignisses von einem Ursprungs-Server zu den mindestens zwei Clients vor der Freigabezeit; und
Senden (370, 470, 570, 670, 770) des Entschlüsselungsschlüssels von einem Schlüssel-Server zu den mindestens zwei Clients nach der vorbestimmten Freigabezeit, wobei es dabei den mindestens zwei Clients ermöglicht wird, die Daten ungefähr gleichzeitig zu entschlüsseln.

17. Computer-lesbarer Datenträger nach Anspruch 16, wobei das Senden des Entschlüsselungsschlüssels geschieht, nachdem die mindestens zwei Clients das Empfangen des verschlüsselten Ereignisses abgeschlossen haben.

18. Computer-lesbarer Datenträger nach Anspruch 16, wobei die Computer-ausführbaren Instruktionen weitere Schritte ausführen, die umfassen:
Senden eines unverschlüsselten Ereignisses von einem Ursprungs-Server zu einem zuverlässigen Rand-Server vor der Freigabezeit, wobei der zuverlässige Rand-Server ein Server in einem Datenübertragungspfad zwischen dem Ursprungs-Server und einem verbundenen Client ist, dem vertraut werden kann, keine Information vor einer geeigneten Zeit freizugeben; und
Senden des unverschlüsselten Ereignisses von dem zuverlässigen Rand-Server zu einem dritten Client zu einer dritten Client-Sendezeit, wobei die dritte Client-Sendezeit es erlaubt, das unverschlüsselte Ereignis durch den dritten Client zu ungefähr derselben Zeit zu empfangen, zu der der Entschlüsselungsschlüssel durch die mindestens zwei Clients empfangen wird.

19. Computer-lesbarer Datenträger nach Anspruch 18, wobei die Computer-ausführbaren Instruktionen weitere Schritte ausführen, die umfassen:
Senden des unverschlüsselten Ereignisses zu einem vierten Client zu einer vierten Client-Sendezeit, wobei die vierte Client-Sendezeit es erlaubt, das unverschlüsselte Ereignis durch den vierten Client zu ungefähr derselben Zeit zu empfangen, zu der der Entschlüsselungsschlüssel durch die mindestens zwei Clients empfangen wird.

20. Computer-lesbarer Datenträger nach Anspruch 18, wobei die dritte Client-Sendezeit es erlaubt, das unverschlüsselte Ereignis durch den dritten Client oder einen vierten Client, von welchem auch immer erwartet wird, es zuerst zu empfangen, zu ungefähr derselben Zeit zu empfangen, zu der der Entschlüsselungsschlüssel durch die mindestens zwei Clients empfangen wird, wobei die Computer-ausführbaren Instruktionen weitere Schritte ausführen, die umfassen:
Senden des unverschlüsselten Ereignisses zu dem vierten Client zu der dritten Client-Sendezeit.

21. Computer-lesbarer Datenträger nach Anspruch 16, wobei der Schlüssel-Server zwei oder mehr Schlüssel-Server umfasst.

22. Computer-lesbarer Datenträger nach Anspruch 16, wobei das Senden des Entschlüsselungsschlüssels zu einer koordinierten Schlüssel-Sendezeit geschieht, wobei die koordinierte Schlüssel-Sendezeit darauf basiert, wann alle Clients in der Netzwerkumgebung das verschlüsselte Ereignis empfangen.

23. Computer-lesbarer Datenträger nach Anspruch 16, wobei das Senden des Entschlüsselungsschlüssels das Senden des Entschlüsselungsschlüssels zu den mindestens zwei Clients, nachdem alle der mindestens zwei Clients das verschlüsselte Ereignis empfangen haben, umfasst.

24. Computer-lesbarer Datenträger nach Anspruch 23, wobei die Computer-ausführbaren Instruktionen weitere Schritte ausführen, die umfassen:
Senden des verschlüsselten Ereignisses zu einem zuverlässigen Rand-Server, wobei der zuverlässige Rand-Server ein Server in eine Netzwerkumgebung ist, dem vertraut werden kann, keine Information vor einer geeigneten Zeit freizugeben;
Entschlüsseln des verschlüsselten Ereignisses bei dem zuverlässigen Rand-Server; und
Senden eines entschlüsselten Ereignisses von dem zuverlässigen Rand-Server zu einem dritten Client zu einer dritten Client-Sendezeit, wobei die dritte Client-Sendezeit eine Funktion einer erwarteten Übertragungszeit des entschlüsselten Ereignisses zu dem dritten Client und einer dritten Client-Ankunftszeit, zu der der dritte Client das entschlüsselte Ereignis empfängt, ist, wobei dritte Client-Ankunftszeit ungefähr dieselbe Zeit ist, zu der der Entschlüsselungsschlüssel durch die mindestens zwei Clients empfangen wird.

25. System zur gerechten Verbreitung eines Ereignisses über eine Netzwerkumgebung unter Verwendung eines Multicasting-Protokolls, wobei das Ereignis Informationen aufweist, die vorgesehen sind, nicht eher als eine vorbestimmte Freigabezeit (360, 460, 560, 660, 760) freigegeben zu werden, wobei das System umfasst:
einen Ursprungs-Server (210);
einen Schlüssel-Server; und
mindestens einen ersten und einen zweiten Client (50, 150);
wobei der Ursprungs-Server eingerichtet ist zum Senden eines verschlüsselten Ereignisses vor der Freigabezeit zu den mindestens zwei Clients, und wobei der Schlüssel-Server eingerichtet ist zum Senden des Entschlüsselungsschlüssels zu den mindestens zwei Clients nach der vorbestimmten Freigabezeit, wobei es dabei den mindestens zwei Clients ermöglicht wird, die Daten ungefähr gleichzeitig zu entschlüsseln.

26. System nach Anspruch 25, wobei der Schlüssel-Server eingerichtet ist zum Senden des Entschlüsselungsschlüssels, nachdem alle der mindestens zwei Clients das Empfangen des verschlüsselten Ereignisses abgeschlossen haben.

27. System nach Anspruch 25, das des Weiteren einen zuverlässigen Rand-Server umfasst, wobei der zuverlässige Rand-Server ein Server in einem Datenübertragungspfad zwischen dem Ursprungs-Server und einem verbundenen Client ist, dem vertraut werden kann, keine Information vor einer geeigneten Zeit freizugeben.

28. System nach Anspruch 27, das des Weiteren einen dritten Client umfasst, wobei der Ursprungs-Server eingerichtet ist zum Senden eines unverschlüsselten Ereignisses zu dem zuverlässige Rand-Server, und wobei der zuverlässige Rand-Server eingerichtet ist zum Senden des unverschlüsselten Ereignisses zu dem dritten Client zu einer dritten Client-Sendezeit, wobei die dritte Client-Sendezeit es erlaubt, das unverschlüsselte Ereignis durch den dritten Client zu ungefähr derselben Zeit zu empfangen, zu der der Entschlüsselungsschlüssel durch die mindestens zwei Clients empfangen wird.

29. System nach Anspruch 27, wobei der Ursprungs-Server des Weiteren eingerichtet ist zum Senden eines unverschlüsselten Ereignisses zu einem zuverlässigen Rand-Server, wobei der zuverlässige Rand-Server eingerichtet ist zum Verschlüsseln des unverschlüsselten Ereignisses, und wobei der zuverlässige Rand-Server eingerichtet ist zum Senden des verschlüsselten Ereignisses zu den mindestens zwei Clients.

30. System nach Anspruch 27, das des Weiteren einen dritten Client umfasst, wobei der Ursprungs-Server eingerichtet ist zum Senden des verschlüsselten Ereignisses zu dem zuverlässigen Rand-Server, wobei der Schlüssel-Server eingerichtet ist zum Senden des Entschlüsselungsschlüssels zu dem zuverlässigen Rand-Server, wobei der zuverlässige Rand-Server eingerichtet ist zum Entschlüsseln des verschlüsselten Ereignisses, und wobei der zuverlässige Rand-Server eingerichtet ist zum Senden des entschlüsselten Ereignisses zu dem dritten Client zu einer dritten Client-Sendezeit, wobei die dritte Client-Sendezeit es erlaubt, das entschlüsselte Ereignis durch den dritten Client zu ungefähr derselben Zeit zu empfangen, zu der der Entschlüsselungsschlüssel durch die mindestens zwei Clients empfangen wird.

31. System nach Anspruch 25, wobei der Schlüssel-Server eingerichtet ist zum Senden des Entschlüsselungsschlüssels zu einer koordinierten Schlüssel-Sendezeit, und wobei die koordinierte Schlüssel-Sendezeit darauf basiert, wann die mindestens zwei Clients das verschlüsselte Ereignis empfangen.

32. System nach Anspruch 25, wobei der Schlüssel-Server eingerichtet ist zum Multicasting einer Schlüssel-Nachricht, die mindestens eine Kopie des Entschlüsselungsschlüssels umfasst.

33. System nach Anspruch 25, wobei der Ursprungs-Server und der Schlüssel-Server zusammen in einem einzelnen Server implementiert sind.

34. System nach Anspruch 33, das des Weiteren einen dritten Client und einen zuverlässigen Rand-Server umfasst, wobei der zuverlässige Rand-Server ein Server ist, dem vertraut werden kann, keine Information vor einer geeigneten Zeit freizugeben, und wobei des Weiteren der zuverlässigen Rand-Server eingerichtet ist zum Senden eines unverschlüsselten Ereignisses zu dem dritten Client zu einer dritten Client-Sendezeit, wobei die dritte Client-Sendezeit es erlaubt, das unverschlüsselte Ereignis durch den dritten Client zu ungefähr derselben Zeit zu empfangen, zu der der Entschlüsselungsschlüssel durch die mindestens zwei Clients empfangen wird.

35. System nach Anspruch 33, das des Weiteren einen dritten Client und einen zuverlässigen Rand-Server umfasst, wobei der zuverlässige Rand-Server ein Server ist, dem vertraut werden kann, keine Information vor einer geeigneten Zeit freizugeben, und wobei des Weiteren der zuverlässigen Rand-Server eingerichtet ist zum Empfangen eines verschlüsselten Ereignisses, Entschlüsseln des verschlüsselten Ereignisses und Senden des entschlüsselten Ereignisses zu dem dritten Client zu einer dritten Client-Sendezeit, wobei die dritte Client-Sendezeit es erlaubt, das entschlüsselte Ereignis durch den dritten Client zu ungefähr derselben Zeit zu empfangen, zu der der Entschlüsselungsschlüssel durch die mindestens zwei Clients empfangen wird.

36. System nach Anspruch 35, wobei die zweite Client-Sendezeit durch Bezug auf eine Verbindungshistorie zwischen dem zuverlässigen Rand-Server und dem zweiten Client ermittelt wird.

37. System nach Anspruch 35, wobei die dritte Client-Sendezeit durch Bezug auf ein Ergebnis von Netzwerkfunktionen, die eine dritte Client-Verzögerung zwischen dem zuverlässigen Rand-Server und dem zweiten Client testen, ermittelt wird.

38. Zuverlässiger Rand-Server (220-222), der ein Server in einem Multicast-Protokoll-Datenübertragungspfad zwischen einem Ursprungs-Server und mindestens einem ersten und einem zweiten Client ist, dem vertraut werden kann, keine Information vor einer geeigneten Zeit (360, 460, 560, 660, 760) freizugeben, wobei der zuverlässige Rand-Server umfasst:
Mittel zum Senden eines verschlüsselten Ereignisses an die mindestens zwei Clients (50) vor der Freigabezeit, wobei das Ereignis Informationen umfasst, die vorgesehen sind, nicht eher als die Freigabezeit freigegeben zu werden; und
Mittel zum Senden eines Entschlüsselungsschlüssels zu den mindestens zwei Clients nach der Freigabezeit, wobei es dabei den mindestens zwei Clients ermöglicht wird, die Daten ungefähr gleichzeitig zu entschlüsseln.

39. Zuverlässiger Rand-Server nach Anspruch 38, wobei das Senden des Entschlüsselungsschlüssels geschieht, nachdem alle der mindestens zwei Clients das Empfangen des verschlüsselten Ereignisses abgeschlossen haben.

40. Zuverlässiger Rand-Server nach Anspruch 38, der des Weiteren umfasst:
Mittel zum Entschlüsseln des verschlüsselten Ereignisses; und
Mittel zum Senden des entschlüsselten Ereignisses zu einem dritten Client zu einer dritten Client-Sendezeit, wobei die dritte Client-Sendezeit es erlaubt, das entschlüsselte Ereignis durch den dritten Client zu ungefähr derselben Zeit zu empfangen, zu der der Entschlüsselungsschlüssel durch die mindestens zwei Clients empfangen wird.

41. Zuverlässiger Rand-Server nach Anspruch 40, wobei die dritte Client-Sendezeit durch Bezug auf eine Verbindungshistorie zwischen dem zuverlässigen Rand-Server und dem dritten Client ermittelt wird.

42. Zuverlässiger Rand-Server nach Anspruch 40, wobei die dritte Client-Sendezeit durch Bezug auf ein Ergebnis von Netzwerkfunktionen, die eine dritte Client-Verzögerung zwischen dem zuverlässigen Rand-Server und dem dritten Client testen, ermittelt wird.

43. Zuverlässiger Rand-Server nach Anspruch 38, der des Weiteren umfasst:
Mittel zum Senden eines unverschlüsselten Ereignisses zu einem dritten Client zu einer dritten Client-Sendezeit, wobei die dritte Client-Sendezeit es erlaubt, das unverschlüsselte Ereignis durch den zweiten Client zu ungefähr derselben Zeit zu empfangen, zu der der Entschlüsselungsschlüssel durch den ersten Client empfangen wird.

## Revendications

1. Procédé pour distribuer équitablement un événement à travers un environnement de réseau à au moins un premier et un deuxième client en utilisant un protocole de multidiffusion, l'événement possédant des informations destinées à être publiées pas avant une heure de publication prédéterminée (360, 460, 560, 660, 760), le procédé comportant les étapes consistant à :
envoyer (350, 450, 550, 650, 750) un événement crypté depuis un serveur émetteur aux au moins deux clients avant l'heure de publication, et
envoyer (370, 470, 570, 670, 770) une clé de décryptage depuis un serveur de clés aux au moins deux clients après l'heure de publication prédéterminée, de manière à permettre aux au moins deux clients de décrypter les données approximativement simultanément.

2. Procédé selon la revendication 1, dans lequel l'envoi de la clé de décryptage survient immédiatement après l'heure de publication.

3. Procédé selon la revendication 1, dans lequel l'envoi de la clé de décryptage survient après que l'ensemble des au moins deux clients ait terminé la réception de l'événement crypté.

4. Procédé selon la revendication 1, dans lequel l'événement est destiné à être publié avant une heure de fin prédéterminée, et dans lequel l'envoi de la clé de décryptage survient avant que l'ensemble des au moins deux clients ait terminé la réception de la clé cryptée si l'ensemble des au moins deux clients va terminer la réception de l'événement crypté après une heure d'envoi de dernière clé, l'heure d'envoi de dernière clé étant suffisamment avant l'heure de fin pour permettre la transmission de la clé à l'ensemble des au moins deux clients.

5. Procédé selon la revendication 1 comportant en outre les étapes consistant à :
envoyer un événement non-crypté depuis le serveur émetteur à un serveur périphérique de confiance avant l'heure de publication, le serveur périphérique de confiance étant un serveur, dans un trajet de communications entre le serveur émetteur et un client connecté, auquel on peut faire confiance pour ne pas publier d'informations avant une heure appropriée, et
envoyer l'événement non-crypté à un troisième client à une heure d'envoi au troisième client, l'heure d'envoi au troisième client permettant de recevoir l'événement non-crypté par le troisième client à approximativement la même heure que l'heure à laquelle la clé de décryptage est reçue par les au moins deux clients.

6. Procédé selon la revendication 5 comportant en outre l'étape consistant à :
envoyer l'événement non-crypté à un quatrième client à une heure d'envoi au quatrième client, l'heure d'envoi au quatrième client permettant de recevoir l'événement non-crypté par le quatrième client à approximativement la même heure que l'heure à laquelle la clé de décryptage est reçue par les au moins deux clients.

7. Procédé selon la revendication 5, dans lequel l'heure d'envoi au troisième client permet de recevoir l'événement non-crypté par le troisième client ou un quatrième client, quelque soit celui qui s'attend à le recevoir en premier, à approximativement la même heure que l'heure à laquelle la clé de décryptage est reçue par les au moins deux clients, le procédé comportant en outre l'étape consistant à :
envoyer l'événement non-crypté au quatrième client à l'heure d'envoi au troisième client.

8. Procédé selon la revendication 1, dans lequel le serveur de clés comporte deux ou plus de deux serveurs de clés.

9. Procédé selon la revendication 1, dans lequel l'envoi de la clé de décryptage survient à une heure d'envoi de clé coordonnée, l'heure d'envoi de clé coordonnée étant basée sur le moment auquel tous les clients dans l'environnement de réseau reçoivent l'événement crypté.

10. Procédé selon la revendication 1, dans lequel l'envoi de la clé de décryptage inclut de multidiffuser un message de clé comportant au moins une copie de la clé de décryptage.

11. Procédé selon la revendication 1, dans lequel l'envoi de la clé de décryptage comporte l'envoi de la clé de décryptage aux au moins deux clients après que l'ensemble des au moins deux clients ait reçu l'événement crypté.

12. Procédé selon la revendication 11, comportant en outre les étapes consistant à :
envoyer un événement non-crypté à un serveur périphérique de confiance, dans lequel le serveur périphérique de confiance est un serveur dans l'environnement de réseau auquel on peut faire confiance pour ne pas publier d'informations avant une heure appropriée, et
envoyer l'événement non-crypté à un troisième client à une heure d'envoi au troisième client, l'heure d'envoi au troisième client permettant de recevoir l'événement non-crypté par le troisième client à approximativement la même heure que l'heure à laquelle la clé de décryptage est reçue par les au moins deux clients.

13. Procédé selon la revendication 11, comportant en outre les étapes consistant à :
envoyer un événement crypté à un serveur périphérique de confiance, le serveur périphérique de confiance étant un serveur dans l'environnement de réseau auquel on peut faire confiance pour ne pas publier d'informations avant une heure appropriée,
décrypter l'événement crypté dans le serveur périphérique de confiance, et
envoyer un événement décrypté depuis le serveur périphérique de confiance à un troisième client à une heure d'envoi au troisième client, l'heure d'envoi au troisième client étant fonction d'une heure prévue de transmission de l'événement décrypté au troisième client et de l'heure d'arrivée au troisième client à laquelle le troisième client reçoit l'événement décrypté, l'heure d'arrivée au troisième client étant approximativement la même heure que l'heure à laquelle la clé de décryptage est reçue par les au moins deux clients.

14. Procédé selon la revendication 13, dans lequel l'heure prévue de transmission est déterminée en référence à un historique de connexion entre le serveur périphérique de confiance et le troisième client.

15. Procédé selon la revendication 13, dans lequel l'heure prévue de transmission est déterminée en référence à un résultat de fonctions de réseau testant le temps d'attente entre le serveur périphérique de confiance et le troisième client.

16. Support lisible par ordinateur ayant des instructions exécutables par ordinateur pour distribuer équitablement un événement à travers un environnement de réseau à au moins un premier et un deuxième client en utilisant un protocole de multidiffusion, l'événement possédant des informations destinées à être publiées pas avant une heure de publication prédéterminée (360, 460, 560, 660, 760), les instructions exécutables par ordinateur exécutant les étapes consistant à :
envoyer (350, 450, 550, 650, 750) un événement crypté depuis un serveur émetteur aux au moins deux clients avant l'heure de publication, et
envoyer (370, 470, 570, 670, 770) une clé de décryptage depuis un serveur de clés aux au moins deux clients après l'heure de publication prédéterminée, de manière à permettre aux au moins deux clients de décrypter les données approximativement simultanément.

17. Support lisible par ordinateur selon la revendication 16, dans lequel l'envoi de la clé de décryptage survient après que les au moins deux clients aient terminé la réception de l'événement crypté.

18. Support lisible par ordinateur selon la revendication 16, dans lequel les instructions exécutables par ordinateur exécutent des étapes supplémentaires consistant à :
envoyer un événement non-crypté depuis le serveur émetteur à un serveur périphérique de confiance avant l'heure de publication, le serveur périphérique de confiance étant un serveur, dans un trajet de communications entre le serveur émetteur et un client connecté, auquel on peut faire confiance pour ne pas publier d'informations avant une heure appropriée, et
envoyer l'événement non-crypté depuis le serveur périphérique de confiance à un troisième client à une heure d'envoi au troisième client, l'heure d'envoi au troisième client permettant de recevoir l'événement non-crypté par le troisième client à approximativement la même heure que l'heure à laquelle la clé de décryptage est reçue par les au moins deux clients.

19. Support lisible par ordinateur selon la revendication 18, dans lequel les instructions exécutables par ordinateur exécutent des étapes supplémentaires consistant à :
envoyer l'événement non-crypté à un quatrième client à une heure d'envoi au quatrième client, l'heure d'envoi au quatrième client permettant de recevoir l'événement non-crypté par le quatrième client à approximativement la même heure que l'heure à laquelle la clé de décryptage est reçue par les au moins deux clients.

20. Support lisible par ordinateur selon la revendication 18, dans lequel l'heure d'envoi au troisième client permet de recevoir l'événement non-crypté par le troisième client ou un quatrième client, quelque soit celui qui s'attend à le recevoir en premier, à approximativement la même heure que l'heure à laquelle la clé de décryptage est reçue par les au moins deux clients, les instructions exécutables par ordinateur exécutant en outre les étapes consistant à :
envoyer l'événement non-crypté au quatrième client à l'heure d'envoi au troisième client.

21. Support lisible par ordinateur selon la revendication 16, dans lequel le serveur de clés comporte deux ou plus de deux serveurs de clés.

22. Support lisible par ordinateur selon la revendication 16, dans lequel l'envoi de la clé de décryptage survient à une heure d'envoi de clé coordonnée, l'heure d'envoi de clé coordonnée étant basée sur le moment auquel tous les clients dans l'environnement de réseau reçoivent l'événement crypté.

23. Support lisible par ordinateur selon la revendication 16, dans lequel l'envoi de la clé de décryptage comporte l'envoi de la clé de décryptage aux au moins deux clients après que l'ensemble des au moins deux clients ait reçu l'événement crypté.

24. Support lisible par ordinateur selon la revendication 23, dans lequel les instructions exécutables par ordinateur exécutent en outre les étapes consistant à :
envoyer l'événement crypté à un serveur périphérique de confiance, le serveur périphérique de confiance étant un serveur dans l'environnement de réseau auquel on peut faire confiance pour ne pas publier d'informations avant une heure appropriée,
décrypter l'événement crypté dans le serveur périphérique de confiance, et
envoyer un événement décrypté depuis le serveur périphérique de confiance à un troisième client à une heure d'envoi au troisième client, l'heure d'envoi au troisième client étant fonction d'une heure prévue de transmission de l'événement décrypté au troisième client et d'une heure d'arrivée au troisième client à laquelle le troisième client reçoit l'événement décrypté, l'heure d'arrivée au troisième client étant approximativement la même heure que l'heure à laquelle la clé de décryptage est reçue par les au moins deux clients.

25. Système pour distribuer équitablement un événement à travers un environnement de réseau en utilisant un protocole de multidiffusion, l'événement ayant des informations destinées à être publiées pas avant une heure de publication prédéterminée (360, 460, 560, 660, 760), le système comportant :
un serveur émetteur (210),
un serveur de clés, et
au moins un premier et un deuxième client (50, 150),
dans lequel le serveur émetteur est conçu pour envoyer un événement crypté aux au moins deux clients avant l'heure de publication, et le serveur de clés est conçu pour envoyer la clé de décryptage aux au moins deux clients après l'heure de publication prédéterminée, permettant ainsi aux au moins deux clients de décrypter les données approximativement simultanément.

26. Système selon la revendication 25, dans lequel le serveur de clés est conçu pour envoyer la clé de décryptage après que l'ensemble des au moins deux clients ait terminé la réception de l'événement crypté.

27. Système selon la revendication 25, comportant en outre un serveur périphérique de confiance, dans lequel le serveur périphérique de confiance est un serveur, dans un trajet de communication entre le serveur émetteur et un client connecté, auquel on peut faire confiance pour ne pas publier d'informations avant une heure appropriée.

28. Système selon la revendication 27, comportant en outre un troisième client, dans lequel le serveur émetteur est conçu pour envoyer un événement non-crypté au serveur périphérique de confiance, et le serveur périphérique de confiance est conçu pour envoyer l'événement non-crypté au troisième client à une heure d'envoi au troisième client, l'heure d'envoi au troisième client permettant la réception de l'événement non-crypté par le troisième client à approximativement la même heure que l'heure à laquelle la clé de décryptage est reçue par les au moins deux clients.

29. Système selon la revendication 27, le serveur émetteur étant en outre conçu pour envoyer un événement non-crypté au serveur périphérique de confiance, le serveur périphérique de confiance étant conçu pour crypter l'événement non-crypté, et le serveur périphérique de confiance étant conçu pour envoyer l'événement crypté aux au moins deux clients.

30. Système selon la revendication 27, comportant en outre un troisième client, dans lequel le serveur émetteur est conçu pour envoyer l'événement crypté au serveur périphérique de confiance, le serveur de clés est conçu pour envoyer la clé de décryptage au serveur périphérique de confiance, le serveur périphérique de confiance est conçu pour décrypter l'événement crypté, et le serveur périphérique de confiance est conçu pour envoyer l'événement décrypté au troisième client à une heure d'envoi au troisième client, l'heure d'envoi au troisième client permettant de recevoir l'événement décrypté par le troisième client à approximativement la même heure que l'heure à laquelle la clé de décryptage est reçue par les au moins deux clients.

31. Système selon la revendication 25, dans lequel le serveur de clés est conçu pour envoyer la clé de décryptage à une heure d'envoi de clé coordonnée, l'heure d'envoi de clé coordonnée étant basée sur le moment auquel les au moins deux clients reçoivent l'événement crypté.

32. Système selon la revendication 25, dans lequel le serveur de clés est conçus pour multidiffuser un message de clé comportant au moins une copie de la clé de décryptage.

33. Système selon la revendication 25, dans lequel le serveur émetteur et le serveur de clés sont implémentés ensemble dans un serveur unique.

34. Système selon la revendication 33, comportant en outre un troisième client et un serveur périphérique de confiance, le serveur périphérique de confiance étant un serveur auquel on peut faire confiance pour ne pas publier d'informations avant une heure appropriée, et en outre le serveur périphérique de confiance étant conçu pour envoyer un événement non-crypté au troisième client à une heure d'envoi au troisième client, l'heure d'envoi au troisième client permettant de recevoir l'événement non-crypté par le troisième client à approximativement la même heure que celle à laquelle la clé de décryptage est reçue par les au moins deux clients.

35. Système selon la revendication 33, comportant en outre un troisième client, et un serveur périphérique de confiance, le serveur périphérique de confiance étant un serveur auquel on peut faire confiance pour ne pas publier d'informations avant une heure appropriée, et en outre le serveur périphérique de confiance étant conçu pour recevoir un événement crypté, décrypter l'événement crypté, et envoyer l'événement décrypté au troisième client à une heure d'envoi au troisième client, l'heure d'envoi au troisième client permettant de recevoir l'événement décrypté par le troisième client à approximativement la même heure que l'heure à laquelle la clé de décryptage est reçue par les au moins deux clients.

36. Système selon la revendication 35, dans lequel l'heure d'envoi au deuxième client est déterminée par référence à un historique de connexion entre le serveur périphérique de confiance et le deuxième client.

37. Système selon la revendication 35, dans lequel l'heure d'envoi au troisième client est déterminée en référence à un résultat de fonction de réseau testant un temps d'attente du troisième client entre le serveur périphérique de confiance et le deuxième client.

38. Serveur périphérique de confiance (220-222) qui est un serveur dans un trajet de communication de protocole de multidiffusion entre un serveur émetteur et au moins un premier et un deuxième client, auquel on peut faire confiance pour ne pas publier d'informations avant une heure appropriée (360, 460, 560, 660, 760), le serveur périphérique de confiance comportant :
des moyens pour envoyer un événement crypté aux au moins deux clients (50) avant une heure de publication, l'événement comportant des informations destinées à être publiées pas avant l'heure de publication, et
des moyens pour envoyer une clé de décryptage aux au moins deux clients après l'heure de publication, de manière à permettre aux au moins deux clients de décrypter les données approximativement simultanément.

39. Serveur périphérique de confiance selon la revendication 38, dans lequel l'envoi de la clé de décryptage survient après que l'ensemble des au moins deux clients ait terminé la réception de l'événement crypté.

40. Serveur périphérique de confiance selon la revendication 38, comportant en outre :
des moyens pour décrypter l'événement crypté, et
des moyens pour envoyer l'événement décrypté à un troisième client à une heure d'envoi au troisième client, l'heure d'envoi au troisième client permettant de recevoir l'événement décrypté par le troisième client à approximativement la même heure que l'heure à laquelle la clé de décryptage est reçue par les au moins deux clients.

41. Serveur périphérique de confiance selon la revendication 40, dans lequel l'heure d'envoi au troisième client est déterminée en référence à un historique de connexion entre le serveur périphérique de confiance et le troisième client.

42. Serveur périphérique de confiance selon la revendication 40, dans lequel l'heure d'envoi au troisième client est déterminée en référence à un résultat de fonctions de réseau testant un temps d'attente du troisième client entre le serveur périphérique de confiance et le troisième client.

43. Serveur périphérique de confiance selon la revendication 38, comportant en outre :
des moyens pour envoyer un événement non-crypté à un troisième client à une heure d'envoi au troisième client, l'heure d'envoi au troisième client permettant de recevoir l'événement non-crypté par le deuxième client à approximativement la même heure que l'heure à laquelle la clé de décryptage est reçue par le premier client.
